(19) Europäisches Patentamt
European Patent Office
Office européen des brevets

(11) EP 4 636 654 A1

(12) EUROPEAN PATENT APPLICATION

(43) Date of publication:
22.10.2025 Bulletin 2025/43

(21) Application number: 25159154.1

(22) Date of filing: 20.02.2025

(51) International Patent Classification (IPC):
G06N 5/01 (2023.01)　　　G06N 7/01 (2023.01)
G06N 3/044 (2023.01)　　　G06F 17/11 (2006.01)
G06N 3/047 (2023.01)

(52) Cooperative Patent Classification (CPC):
G06N 5/01; G06F 17/11; G06N 3/044; G06N 3/047;
G06N 7/01; G06N 10/60

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.04.2024 JP 2024067224

(71) Applicant: FUJITSU LIMITED
Kawasaki-shi, Kanagawa 211-8588 (JP)

(72) Inventors:
• WATANABE, Yasuhiro
Kawasaki-shi, 211-8588 (JP)
• FURUE, Yuki
Kawasaki-shi, 211-8588 (JP)
• TAMURA, Hirotaka
Yokohama-shi, 223-0066 (JP)

(74) Representative: Haseltine Lake Kempner LLP
Cheapside House
138 Cheapside
London EC2V 6BJ (GB)

(54) DATA PROCESSING DEVICE, DATA PROCESSING METHOD, AND PROGRAM

(57) A device that searches for a solution represented by a combination of values of state variables using an Ising-type function including the state variables and terms corresponding to constraint conditions, the device performing: retrieving from a storage device, a part of a first weight coefficient group between the state variables, and a part of a second weight coefficient group between each of the state variables and each of the constraint conditions; and executing, using the part of the first and second weight coefficient groups, first processing determining whether a change in values of the first state variables that belong to a trial target portion is permitted, and second processing in which a first local field is updated using the first weight coefficients, a second local field is updated using the second weight coefficients, and the first local field corresponding to each of the first state variables is updated.

FIG. 1

EP 4 636 654 A1

**Description**

FIELD

The embodiments discussed herein are related to a data processing device, a data processing method, and a program.

BACKGROUND

As a device that calculates a large-scale discrete optimization problem which a Neumann-type computer is not good at, there is an Ising device (also referred to as a Boltzmann machine) using an Ising-type evaluation function (also referred to as an energy function or the like).

The Ising device converts a discrete optimization problem into an Ising model that represents a behavior of a spin of a magnetic body. The Ising device searches for a state of the Ising model in which the value of an Ising-type evaluation function is local minimum by a Markov chain Monte Carlo method such as the simulated annealing method or the replica exchange method. The value of the evaluation function corresponds to the energy of the Ising model. A state in which the value of the evaluation function is the minimum value of local minimum values, is the optimal solution. By changing the sign of the evaluation function, the Ising device may also search for a state in which the value of the evaluation function is local maximum. A state of the Ising model may be expressed by a combination of the values of a plurality of state variables. As the value of each state variable, 0 or 1 may be used.

For example, the evaluation function is represented by the following formula (1).

$$E(x) = -\sum_{i=1}^{N}\sum_{j>i}^{N} W_{ij}x_i x_j - \sum_{i=1}^{N} b_i x_i \qquad (1)$$

The first term on the right side adds up the products of the values of two state variables (0 or 1) and a weight coefficient (representing the strength of interaction between two state variables) for all combinations of N state variables of the Ising model without omission or overlap. $x_i$ is a state variable with identification number i, $x_j$ is a state variable with identification number j, and $W_{ij}$ is a weight coefficient indicating the magnitude of interaction between the state variables with identification numbers i and j. The second term on the right side calculates a sum of the products of a bias coefficient and a state variable for each identification number. $b_i$ indicates a bias coefficient for identification number i.

A change amount of energy ($\Delta E_i$) due to a change in the value of $x_i$ is represented by the following formula (2).

$$\Delta E_i = -\Delta x_i \left(\sum_{j}^{N} W_{ij}x_j + b_i\right) = -\Delta x_i h_i \qquad (2)$$

In formula (2), $\Delta x_i$ is -1 when $x_i$ changes from 1 to 0, and $\Delta x_i$ is 1 when the state variable $x_i$ changes from 0 to 1. $h_i$ is referred to as a local field, and $h_i$ multiplied by a sign (+1 or -1) according to $\Delta x_i$ is $\Delta E_i$. For this reason, $h_i$ may be regarded as a variable representing the change amount of energy or a variable determining the change amount of energy.

For example, such processing is repeated that a state transition is generated and a local field is updated by updating the value of $x_i$ with an acceptance probability represented by $\exp(-\beta\Delta E_i)$ ($\beta$ is the reciprocal of a parameter representing temperature).

Meanwhile, some discrete optimization problems have a constraint condition to be satisfied by a solution. For example, a knapsack problem, which is one of discrete optimization problems, has a constraint condition that the total capacity of loads that may be packed in a knapsack is equal to or smaller than the capacity of the knapsack. Such constraint condition is referred to as an inequality constraint, and may be represented by a constraint term having a value corresponding to the presence or absence of violation of the constraint condition. As constraint conditions, there are an equality constraint, an absolute value constraint, and the like in addition to an inequality constraint.

An evaluation function (H(x)) representing the total energy including constraint terms may be represented by the following formula (3).

$$H(x) = -\sum_{i,j\in D} W_{ij}x_ix_j - \sum_{i\in D} b_ix_i + \sum_{k\in A} \lambda_k G_k(h_k) \qquad (3)$$

In formula (3), the sum of the first term and the second term on the right side represents energy corresponding to E(x) of formula (1), and the third term on the right side represents the total energy of constraint terms. D represents a set of identification numbers of state variables, k represents an identification number of a constraint term, and A represents a set of identification numbers of constraint terms. $\lambda_k$ is a predetermined positive coefficient for the constraint term with identification number k.

By way of example, in a case where the constraint condition is an inequality constraint, $G_k(h_k)$ in formula (3) may be represented by the following formula (4).

$$G_k(h_k) = g(h_k) = \max(0, h_k), \ h_k = R_k - U_k = \sum_{i\in D} W_{ki}x_i - U_k \qquad (4)$$

In formula (4), $\max(0, h_k)$ is a function that outputs the larger value of 0 and $h_k$. $R_k$ represents a consumption amount (also referred to as a resource amount) of the constraint term with identification number k, and $U_k$ represents an upper limit of the resource amount. $W_{ki}$ is a coefficient (weight coefficient) indicating the weight of $x_i$ in the inequality constraint with identification number k.

In formula (3), a change amount of energy ($\Delta H_j$) due to a change in the value of $x_j$ is represented by the following formula (5).

$$\Delta H_j = -h_j\Delta x_j + \sum_{k\in A} \lambda_k(g(h_k + W_{kj}\Delta x_j) - g(h_k)) \qquad (5)$$

In the case where the constraint condition is an inequality constraint, a change amount of energy ($\Delta H_j$) due to a change in the value of $x_j$ may be represented by the following formula (6) instead of formula (5).

$$\Delta H_j = - h_j\Delta x_j$$
$$+ \sum_{i=1}^{M} \lambda_i(\max[0, h_i + a_{ij}\Delta x_j - C_{ui}] - \max[0, h_i - C_{ui}]) \qquad (6)$$

In formula (6), $a_{ij}$ is a coefficient indicating the weight of $x_j$ in the inequality constraint with identification number i, and corresponds to the above $W_{ki}$. $C_{ui}$ is an upper limit value in the inequality constraint with identification number i, and corresponds to the above $U_k$. M represents the number of constraint terms.

An acceptance probability $A(\Delta H_j)$ of accepting a change in the value of $x_j$ is represented by formula (7).

$$A(\Delta H) = \begin{cases} \min[1, \exp(-\beta \cdot \Delta H)] & \text{Metropolis} \\ 1/[1 + \exp(\beta \cdot \Delta H)] & \text{Gibbs} \end{cases} \qquad (7)$$

The upper side of formula (7) is the Metropolis method, and the lower side is the Gibbs method. $\min[1, \exp(-\beta\Delta H)]$ is a function that outputs the smaller value of 1 and $\exp(-\beta\Delta H)$.

A technique is proposed in which solution finding is performed by an Ising device using a constraint term of an inequality constraint such as that described above in a linear form as it is. A system is proposed in which a large-scale combinatorial optimization problem is solved by being distributed to a plurality of nodes. A method is proposed in which an optimization problem of a continuous quantity is solved by using a sampling device of a binary variable. A calculation system is proposed in which a problem is solved by cooperation of a quantum processor and a non-quantum processor.

A device is proposed in which, in solution finding of an optimization problem including a constraint condition, processing is performed in which a local field corresponding to the constraint condition is updated, the local field representing a constraint violation amount affected by a change in state variable, and a local field corresponding to the state variable is updated based on the local fields before and after update.

A device is also proposed in which a part of coupling coefficients related to state variables in a window are read into an internal memory from an external storage device that stores all coupling coefficients, in order to perform solution finding while switching windows that are portions to which two or more state variables as trial targets of all state variables belong.

Japanese Laid-open Patent Publication No. 2020-204928, Japanese Laid-open Patent Publication No. 2022-125725, U.S. Patent Application Publication No. 2015/0363358, U.S. Patent Application Publication No. 2020/0167685, Japanese Laid-open Patent Publication No. 2023-149428, and Japanese Laid-open Patent Publication No. 2023-149806 are disclosed as related art.

SUMMARY

TECHNICAL PROBLEM

In a large-scale discrete optimization problem including a constraint condition, calculation resources such as the capacity of a memory for holding a weight coefficient to be used for a solution search are insufficient, and solution finding may not be efficiently performed in some cases.

In one aspect, an object of the present disclosure is to efficiently perform solution finding of a large-scale problem.

SOLUTION TO PROBLEM

According to an aspect of the embodiments, there is provided a data processing device that searches for a solution represented by a combination of values of a plurality of state variables based on an Ising-type evaluation function that includes the plurality of state variables and terms that correspond to a plurality of constraint conditions, the data processing device including: a storage unit that stores a part of a first weight coefficient group stored in a storage device that stores a first weight coefficient group that indicates weights between the plurality of state variables and a second weight coefficient group that indicates weights between each of the plurality of state variables and each of the plurality of constraint conditions, a part of the second weight coefficient group stored in the storage device, a first local field that represents a change amount of a value of the evaluation function in a case where a value of each of the plurality of state variables changes, and a second local field used for identification of a constraint violation amount for each of the plurality of constraint conditions; and a processing unit that repeats processing of for a trial target portion of the plurality of state variables that is a portion that includes a plurality of first state variables that is a target of a trial as to whether update of values is to be performed, reading, from the storage device, first weight coefficients that correspond to first state variables that belong to the trial target portion in the first weight coefficient group and second weight coefficients that correspond to the first state variables that belong to the trial target portion in the second weight coefficient group, and storing the first and second weight coefficients in the storage unit, executing search processing that repeats first processing in which whether a change in values of the first state variables that belong to the trial target portion is permitted is determined based on the first local field, and second processing in which, when it is determined that a change in values of the first state variables is permitted, the first local field is updated based on the first weight coefficients stored in the storage unit, the second local field is updated based on the second weight coefficients stored in the storage unit, and the first local field that corresponds to each of the plurality first state variables is further updated based on the second local field before update and the second local field after update, when the search processing for the trial target portion of this time ends, updating the first local field that corresponds to a second state variable that does not belong to the trial target portion of this time based on the second local field at start of the search processing for the trial target portion of this time and the second local field after the search processing for the trial target portion of this time, and changing the trial target portion to a next portion of the plurality of state variables.

ADVANTAGEOUS EFFECTS OF INVENTION

In one aspect, solution finding of a large-scale problem may be efficiently performed.

BRIEF DESCRIPTION OF DRAWINGS

FIG. 1 is a diagram for describing a data processing device of a first embodiment;
FIG. 2 is a diagram illustrating a hardware example of a data processing device of a second embodiment;
FIG. 3 is a diagram illustrating a function example of the data processing device;
FIG. 4 is a diagram illustrating an example of weight coefficient groups;

FIG. 5 is a diagram illustrating a search processing example;
FIG. 6 is a diagram illustrating a continuation of the search processing example;
FIG. 7 is a flowchart illustrating an example of overall processing;
FIG. 8 is a flowchart illustrating an example of in-window search processing;
FIG. 9 is a flowchart illustrating an example of local field update processing outside a search region;
FIG. 10 is a diagram illustrating a function example of a data processing device of a third embodiment;
FIG. 11 is a diagram illustrating an example of weight coefficient groups;
FIG. 12 is a diagram illustrating an example of search processing;
FIG. 13 is a diagram illustrating a continuation of the example of search processing;
FIG. 14 is a flowchart illustrating an example of local field update processing outside a search region;
FIG. 15 is a flowchart illustrating an example of separation method determination processing;
FIG. 16 is a diagram illustrating a change example of the value of a penalty function due to a change in the value of a state variable; and
FIG. 17 is a diagram illustrating a procedure of an example of local field update.

DESCRIPTION OF EMBODIMENTS

Hereinafter, the present embodiments will be described with reference to the drawings.

[First Embodiment]

A first embodiment will be described.

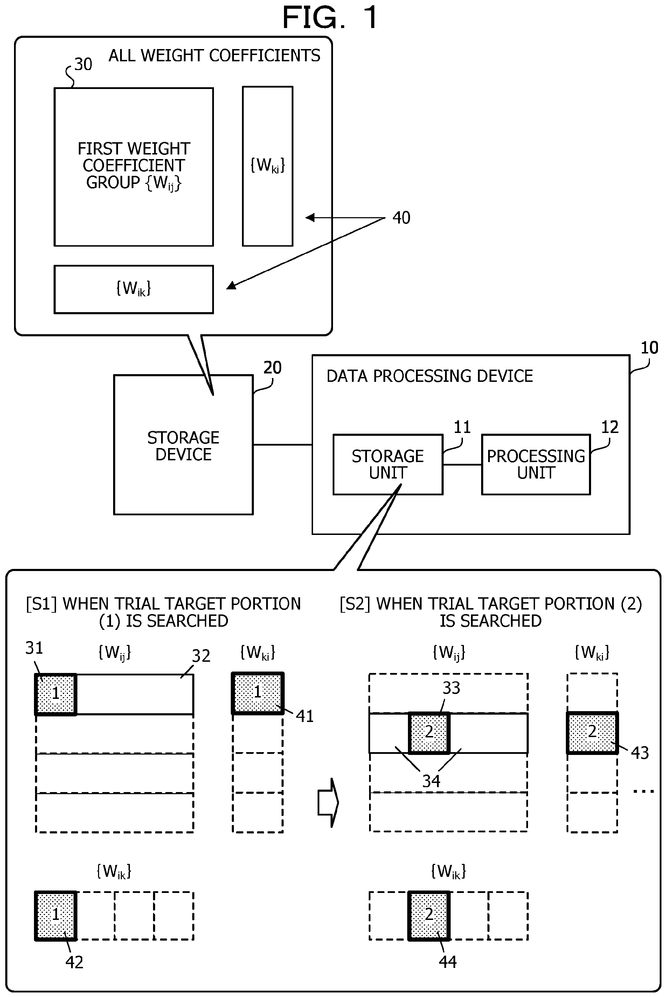

FIG. 1 is a diagram for describing a data processing device of the first embodiment.
A data processing device 10 of the first embodiment includes a storage unit 11 and a processing unit 12. The data processing device 10 is coupled to a storage device 20 via a predetermined interface.
For example, the storage device 20 is a volatile storage device that is an electronic circuit such as a dynamic random-access memory (DRAM). However, the storage device 20 may be a nonvolatile storage device that is an electronic circuit such as a hard disk drive (HDD) or a flash memory. The storage device 20 may be provided outside the data processing device 10 or may be included in the data processing device 10.
The storage device 20 stores the values of a plurality of (hereinafter, N) state variables ($x_i$), a first weight coefficient group 30 indicating weights between N $x_i$, and a second weight coefficient group 40 indicating weights between each of N $x_i$ and each of a plurality of (hereinafter, M) constraint conditions. The first weight coefficient group 30 is represented as $\{W_{ij}\}$. For example, $W_{ij} = W_{ji}$. The second weight coefficient group 40 in which $W_{ii} = 0$ is represented as $\{W_{ki}\}$ and $\{W_{ik}\}$. For example, $W_{ki} = W_{ik}$. However, it may be $W_{ki} \neq W_{ik}$. i is an identification number representing any of N $x_i$, and k is an identification number representing any of M constraint terms (or constraint conditions). The storage unit 11 does not have to store a second weight coefficient related to a state variable that does not affect any of the M constraint conditions (second weight coefficient of which the value is 0). The first weight coefficient group 30 plus the second weight coefficient group 40 is all weight coefficients. In the weight coefficient groups 30 and 40 of FIG. 1, the direction from left to right in the drawing is a direction from a smaller index to a larger index, and the direction from top to bottom is a direction from a smaller index to a larger index.
For example, the storage unit 11 is an electronic circuit such as a static random-access memory (SRAM) register.
The storage unit 11 stores H(x), a part of the first weight coefficient group 30 read from the storage device 20, a part of the second weight coefficient group 40, and ($W_{ki}$).
The storage unit 11 stores a first local field ($h_i$) representing a change amount ($\Delta H_i$) of H(x) in a case where the value of each of N $x_i$ changes, and a second local field ($h_k$) used for identifying a constraint violation amount for each of M constraint conditions. A state variable may also be referred to as a decision variable. Since each second local field corresponds to each constraint term, it may be said that a second weight coefficient is a weight coefficient between a state variable and a second local field.
H(x) is represented by formula (8). Formula (8) is a restatement of formula (3).

$$H(x) = -\sum_{i,j \in D} W_{ij} x_i x_j - \sum_{i \in D} b_i x_i + \sum_{k \in A} \lambda_k G_k(h_k) \qquad (8)$$

The total energy of the M constraint terms corresponding to the M constraint conditions corresponds to the third term on the right side of formula (8). $\lambda_k$ is a proportional coefficient related to the constraint term of identification number = k and represents the weight of the constraint term. $\lambda_k$ may be a different value for each constraint term. For example, $G_k(h_k)$ may be a Max function such as that represented by formula (4), or may be another function such as a step function. As will be described later, various constraint conditions may be represented by $G_k(h_k)$. Hereinafter, $G_k(h_k)$ is referred to as a penalty function.

The second local field ($h_k$) may be represented by the following formula (9).

$$h_k = \sum_{i \in D} W_{ki} x_i + b_k \tag{9}$$

In formula (9), $b_k$ is a coefficient related to the constraint condition of identification number = k. In a case where the constraint condition of identification number = k is an inequality constraint, the first term on the right side of formula (9) corresponds to $R_k$ in the aforementioned formula (4), and $+b_k$ corresponds to $-U_k$ in formula (4). For this reason, as described before, it may be said that $h_k$ is a variable used for identifying the difference between $R_k$ and $U_k$, for example, a constraint violation amount.

By way of example, $G_k(h_k)$ is represented by formula (10).

$$G_k(h_k) = \max(0, h_k) \tag{10}$$

Hereinafter, $G_k(h_k)$ of formula 10 = $g(h_k)$.

$\Delta H_i$ in a case where the value of a certain state variable ($x_i$) changes may be represented by the following formula (11) using the penalty function.

$$\Delta H_i = - \left( \sum_{j \in D} W_{ij} x_j + b_i \right) \Delta x_i$$
$$+ \sum_{k \in A} \lambda_k [g(h_k + W_{ki} \Delta x_i) - g(h_k)] \tag{11}$$

$g(h_k + W_{ki} \Delta x_i) - g(h_k)$ in formula (11) represents a change amount of the value of the penalty function (which may also be referred to as a change amount of constraint term) in the case where the value of a certain state variable ($x_i$) changes.

The first local field ($h_i$) is represented by the following formula (12).

$$h_i = \left( \sum_{j \in D} W_{ij} x_j + b_i \right) - \sum_{k \in A} \lambda_k \Delta g(h_k, W_{ki} \Delta x_i) \tag{12}$$

In formula (12), $\Delta g(h_k, W_{ki} \Delta x_i)$ is represented by the following formula (13), and is an amount that may be calculated from the present $x_i$, $h_k$, $W_{ki}$.

$$\Delta g(h_k, W_{ki} \Delta x_i) = \Delta x_i [g(h_k + W_{ki} \Delta x_i) - g(h_k)] \tag{13}$$

By using $h_i$ as in formula (12), $\Delta H_i$ may be represented by formula (14).

$$\Delta H_i = -h_i \Delta x_i \tag{14}$$

The storage unit 11 may further store a bias coefficient ($b_i$), a proportional coefficient ($\lambda_k$), and a coefficient ($b_k$) related to a constraint condition. The storage unit 11 may store various types of data such as calculation conditions under which the processing unit 12 executes a data processing method to be described later. In a case where the processing unit 12 executes a part or all of the processing of the data processing method to be described later by software, a program for executing the processing may be stored in the storage unit 11 or the storage device 20.

The processing unit 12 in FIG. 1 may be realized by a processor that is hardware, such as a central processing unit (CPU), a graphics processing unit (GPU), or a digital signal processor (DSP). The processing unit 12 may be realized by a processor such as an application-specific integrated circuit (ASIC) or a field-programmable gate array (FPGA).

For example, the processing unit 12 searches for a state in which H(x) is local minimum. A state when the value of H(x) is the minimum value of local minimum values, is the optimal solution. By changing the sign of H(x), the processing unit 12 may also search for a state in which the value of H(x) is local maximum. In this case, a state when the value is the maximum value is the optimal solution. The processing unit 12 repeatedly performs the following processing.

The processing unit 12 identifies a trial target portion of a plurality of state variables that is a portion including a plurality of first state variables that is a target of a trial as to whether update of the values is to be performed. A set of indices belonging to a trial target portion or a set of first state variables corresponding to the set of indices is referred to as a window. The number P (P is an integer of 2 or larger) of first state variables belonging to one trial target portion is determined in advance. The indices of the first state variables belonging to one trial target portion may be continuous or discontinuous. The processing unit 12 separates all state variables into a plurality of trial target portions in advance by a predetermined method.

The processing unit 12 reads, from the storage device 20, first weight coefficients corresponding to the first state variables belonging to a trial target portion in the first weight coefficient group 30 and second weight coefficients corresponding to the first state variables belonging to the trial target portion in the second weight coefficient group 40, and stores the weight coefficients in the storage unit 11.

In the following description, the processing unit 12 reads only a portion of the first weight coefficient group 30 corresponding to a pair of first state variables belonging to a trial target portion (for example, a portion 31) as the first weight coefficient to be read into the storage unit 11 and performs solution search processing. For example, the processing unit 12 does not cause a portion corresponding to a pair of a first state variable and a state variable not belonging to the trial target portion (for example, a portion 32) to be held in the storage unit 11 during the search processing. However, as will be described later, the processing unit 12 may cause the portion 32 to be held in the storage unit 11 in addition to the portion 31 at the time of search processing.

The processing unit 12 repeatedly performs search processing including the following first processing and second processing based on the information stored in the storage unit 11.

In the first processing, the processing unit 12 determines whether a change in the value of a first state variable belonging to the trial target portion is permitted based on a first local field.

For example, the processing unit 12 selects a state variable of a candidate whose value is to be changed (hereinafter referred to as flip candidate) from the plurality of first state variables belonging to the trial target portion. For example, the processing unit 12 selects state variables of flip candidates randomly or in a predetermined order.

The processing unit 12 calculates $\Delta H$ in a case where the value of the selected state variable changes. For example, in a case where $x_i$ is selected, $\Delta H_i$ may be calculated by the formula $\Delta H_i = -h_i \Delta x_i$ based on $h_i$ as described above.

Next, the processing unit 12 determines whether a change in the value of a state variable of flip candidate is permitted, for example, whether flipping is permitted, based on a comparison result between $\Delta H$ and a predetermined value. Hereinafter, this determination processing is referred to as flip determination processing.

For example, the predetermined value is a noise value obtained based on a random number and a value of temperature parameter. For example, $\log(rand) \times T$, which is an example of a noise value obtained based on a uniform random number (rand) of 0 or more and 1 or less and a temperature parameter (T), may be used as the predetermined value. In this case, when $-\Delta H_i \geq \log(rand) \times T$, the processing unit 12 determines that a change in the value of a state variable of flip candidate is permitted (flipping is permitted). When it is determined that flipping is permitted, the processing unit 12 performs the following second processing.

The processing unit 12 sequentially or randomly selects state variables of value change candidates one by one and performs determination of whether flipping is permitted. On the other hand, for example, the processing unit 12 may perform the determination of whether flipping is permitted in parallel for the plurality of first state variables belonging to the trial target portion based on the determination formula of $-\Delta H_i \geq \log(rand) \times T$ based on formula (7) The method of performing determination of whether flipping is permitted in parallel for a plurality of state variables is referred to as the rejection-free method. In the rejection-free method, the processing unit 12 performs a solution search by updating the value of any state variable of the state variables that have been determined that flipping is permitted based on a result of parallel determination.

In the second processing, when it is determined that a change in the value of a first state variable is permitted, the processing unit 12 updates the first local field based on the first weight coefficient stored in the storage unit 11. The processing unit 12 updates a second local field based on the second weight coefficient stored in the storage unit 11. The processing unit 12 further updates the first local field corresponding to each of the plurality of first state variables based on the second local field before update and the second local field after update.

For example, when it is determined that flipping is permitted for $x_j$, the processing unit 12 performs update of $h_i$ by adding $\Delta h_i = W_{ij} \Delta x_j$ to the original $h_i$ for each of the plurality of first state variables. When i = j, $W_{ii} = 0$, and update does not have to be performed since $h_i$ does not change. The update for $h_i$ is represented by formula (15).

$$h_i \leftarrow h_i + W_{ij}\Delta x_j \qquad\qquad i,j \in D, i \neq j \qquad\qquad (15)$$

When it is determined that flipping is permitted for $x_j$, the processing unit 12 performs update of $h_k$ by adding $\Delta h_k = W_{kj}\Delta_{xj}$ to $h_k$ for which the second weight coefficient ($W_{kj}$) between $h_k$ and $x_j$ is non-zero. The update for $h_k$ is represented by formula (16).

$$h_k \leftarrow h_k + W_{kj}\Delta x_j \qquad\qquad k \in A \qquad\qquad (16)$$

The processing unit 12 may efficiently update $h_i$ and $h_k$ at the parallelism of N + M by formulae (15) and (16). The processing unit 12 further updates $h_i$ for each of the plurality of first state variables based on $h_k$ before and after update in accordance with the following formula (17).

$$h_i \leftarrow h_i - \lambda_k[\Delta g(h_k, W_{ki}\Delta x_i) - \Delta g(h_k^{(old)}, W_{ki}\Delta x_i)] \qquad\qquad (17)$$

In formula (17), $h_k^{(old)}$ represents $h_k$ before update. When i = j, the update does not have to be performed since $h_i$ does not change. When the number of first state variables belonging to the trial target portion is t, the processing unit 12 serially performs parallel update of O(t) for k M times for all i ($\neq$ j) corresponding to the t first state variables with respect to the update of formula (17).

Japanese Laid-open Patent Publication No. 2023-149428 (corresponding to a U.S. Patent Application No. 18/150422) serves as a useful reference for the above first processing and second processing. It is noted that the entire contents of this reference may be incorporated herein by reference.

The processing unit 12 repeatedly performs the search processing including the above first processing and second processing. While an example in which state variables of flip candidates are selected one by one from the plurality of first state variables belonging to the trial target portion and the first processing has been given in the above description, the first processing may be performed in parallel for two or more first state variables. In such case, when there is a plurality of first state variables for which a change in the value is permitted, the processing unit 12 selects first state variables whose value is to be changed, randomly or in accordance with a predetermined rule.

The processing unit 12 acquires a second local field $h_{k\_before}$ at the start of search processing for the current trial target portion held in the storage unit 11. The processing unit 12 updates the first local field corresponding to a second state variable not belonging to the current trial target portion based on $h_{k\_before}$ and a second local field $h_{k\_after}$ after the search processing for the current trial target portion. The update of first local field is represented by formula (18).

$$h_i \leftarrow h_i - \lambda_k[\Delta g(h_{k\_after}, W_{ki}\Delta x_i) - \Delta g(h_{k\_before}, W_{ki}\Delta x_i)] \qquad\qquad (18)$$

It may be said that the processing represented by formula (18) is update processing for the first local field of a state variable outside a window.

In the update of the first local field corresponding to a second state variable, the processing unit 12 performs update in accordance with formula (15) together with the update of formula (18). For example, the processing unit 12 also performs update of the first local field of a second state variable based on a change in the value of a first state variable belonging to the current trial target portion and the first weight coefficient corresponding to the pair of the first state variable and the second state variable.

The processing unit 12 changes the trial target portion to the next portion of the plurality of state variables. The processing unit 12 repeatedly performs the above series of processing.

When the trial target portion is changed to the next portion, the processing unit 12 reads the first weight coefficients and second weight coefficients corresponding to the trial target portion from the storage device 20 and stores the weight coefficients in the storage unit 11. At this time, the first weight coefficient and second weight coefficient corresponding to the previous trial target portion are deleted from the storage unit 11.

In this way, the processing unit 12 may switch a plurality of trial target portions and perform search processing for each trial target portion. In this case, for example, the weight coefficients held in the storage unit 11 are as follows.

First, when a trial target portion (1) of all state variables is searched, the processing unit 12 reads the portion 31 of a first weight coefficient corresponding to a pair of first state variables belonging to the trial target portion (1) in the first weight coefficient group 30, from the storage device 20 into the storage unit 11. The processing unit 12 reads portions 41 and 42 of second weight coefficients between each of a plurality of first state variables belonging to the trial target portion (1) and each of a plurality of constraint conditions in the second weight coefficient group 40, into the storage unit 11 (S1). In S1, search processing is repeatedly performed by using the weight coefficients included in the portions 31, 41, and 42 held in the storage unit 11.

When the search processing of S1 ends, the processing unit 12 performs update of the first local field of a second state variable represented by formula (15) based on a change in the value of each first state variable belonging to the trial target portion (1) and the first weight coefficient of the portion 32. The first weight coefficient of the portion 32 is a first weight coefficient corresponding to a pair of a first state variable belonging to the trial target portion (1) and a second state variable not belonging to the trial target portion (1). The processing unit 12 performs update of the first local field of a second state variable represented by formula (18) based on a change in the value of each first state variable belonging to the trial target portion (1) and the current $h_{k\_before}$ and $h_{k\_after}$. The processing unit 12 may sequentially read the first weight coefficient of the portion 32 and the weight coefficient used in formula (18) from the storage device 20 into the storage unit 11. The processing unit 12 proceeds to search processing of the next trial target portion (2).

When the trial target portion (2) is searched, the processing unit 12 reads a portion 33 of a first weight coefficient corresponding to a pair of first state variables belonging to the trial target portion (2) in the first weight coefficient group 30, from the storage device 20 into the storage unit 11. The processing unit 12 reads portions 43 and 44 of second weight coefficients between each of a plurality of first state variables belonging to the trial target portion (2) and each of a plurality of constraint conditions in the second weight coefficient group 40, into the storage unit 11 (S2). In S2, search processing is repeatedly performed by using the weight coefficients included in the portions 33, 43, and 44 held in the storage unit 11.

When the search processing of S2 ends, the processing unit 12 performs update of the first local field of a second state variable represented by formula (15) based on a change in the value of each first state variable belonging to the trial target portion (2) and the first weight coefficient of the portion 34. The first weight coefficient of the portion 34 is a first weight coefficient corresponding to a pair of a first state variable belonging to the trial target portion (2) and a second state variable not belonging to the trial target portion (2). At the same time, the processing unit 12 performs update of the first local field of a second state variable represented by formula (18) based on a change in the value of each first state variable belonging to the trial target portion (2) and the current $h_{k\_before}$ and $h_{k\_after}$. The processing unit 12 may sequentially read the first weight coefficient of the portion 34 and the weight coefficient used in formula (18) from the storage device 20 into the storage unit 11. The processing unit 12 proceeds to search processing of the next trial target portion.

In this way, the processing unit 12 may reduce the size of the weight coefficients held in the storage unit 11 in search processing.

As described before, at the time of the search processing of S1, the processing unit 12 may read the first weight coefficient of the portions 31 and 32 from the storage device 20 into the storage unit 11 and hold the first weight coefficient in the storage unit 11. The processing unit 12 may update the first local fields $h_i$ of all of the N state variables by formula (15) with the first weight coefficient of the portions 31 and 32 according to a change in the value of any first state variable in the search processing. In this case, when the search processing of S1 ends, the processing unit 12 only has to perform update the first local field of a second state variable represented by formula (18), and does not update the first local field of a second state variable represented by formula (15).

Similarly, at the time of the search processing of S2, the processing unit 12 may read the first weight coefficient of the portions 33 and 34 from the storage device 20 into the storage unit 11 and hold the first weight coefficient in the storage unit 11. The processing unit 12 may update the first local fields $h_i$ of all of the N state variables by formula (15) with the first weight coefficient of the portions 33 and 34 according to a change in the value of any first state variable in the search processing. In this case, when the search processing of S2 ends, the processing unit 12 only has to perform update the first local field of a second state variable represented by formula (18), and does not update the first local field of a second state variable represented by formula (15).

Even with this configuration, the processing unit 12 may reduce the size of the weight coefficients held in the storage unit 11. However, the size of the weight coefficients held in the storage unit 11 may be further reduced when the first weight coefficient of the portion 32 or the first weight coefficient of the portion 34 is not held in the storage unit 11 at the time of search processing.

For example, in a case where the simulated annealing method is performed, the processing unit 12 decreases the aforementioned value of temperature parameter (T) in accordance with a predetermined temperature parameter change schedule every time the flip determination processing for a state variable is repeated a predetermined number of times. The processing unit 12 outputs a state obtained when the flip determination processing is repeated a predetermined number of times (or when a predetermined T is reached), as a calculation result of a discrete optimization problem. The processing unit 12 may cause the storage unit 11 to hold the minimum energy up to this point and the state thereof. In such case, the processing unit 12 may output, as the calculation result, a state corresponding to the minimum energy stored after the flip determination processing have been repeatedly performed a predetermined number of times.

In a case where the processing unit 12 performs the replica exchange method, the processing unit 12 repeats the above processing for each of a plurality of replicas for which different values of T are set. The processing unit 12 performs replica exchange every time the flip determination processing is repeated a predetermined number of times. For example, the processing unit 12 selects two replicas having adjacent values of T, and exchanges the values of state variables between the selected two replicas at a predetermined exchange probability based on the energy difference between the replicas or the difference in the value of T. The values of T may be exchanged between the two replicas instead of the values of state variables. Alternatively, the processing unit 12 holds the minimum energy up to this point and the state thereof. The processing unit 12 outputs, as a calculation result, a state corresponding to the minimum energy in all replicas among the minimum energies stored after the above flip determination processing is repeated a predetermined number of times in each replica.

According to the above-described data processing device 10, it is possible to reduce the size of the weight coefficients held in the storage unit 11 at the time of search processing. Arithmetic resources for the search processing of the processing unit 12 may be reduced by narrowing down the target of search processing to a trial target portion of all state variables. Consequently, the data processing device 10 may efficiently execute solution finding of a large-scale discrete optimization problem including a constraint condition by using relatively small calculation resources.

[Second Embodiment]

Next, a second embodiment will be described.

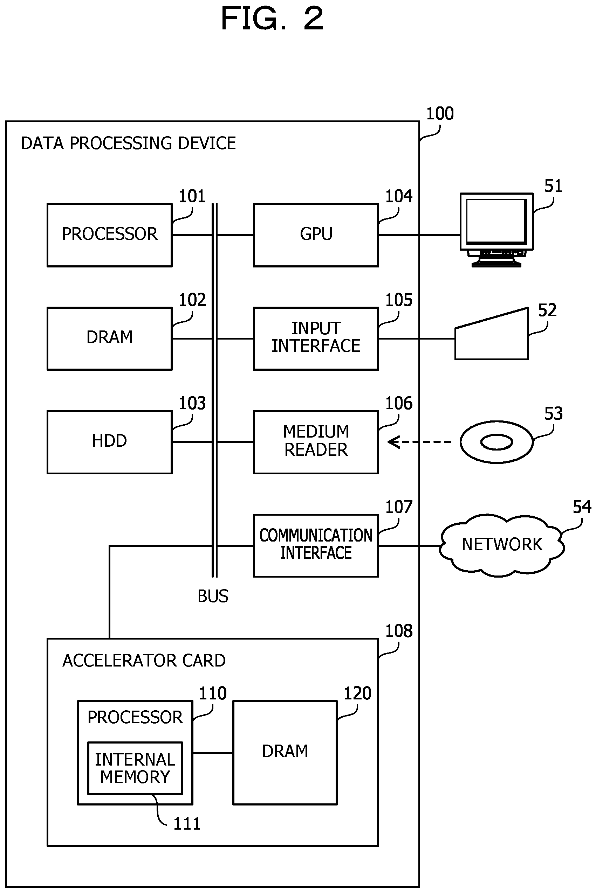

FIG. 2 is a diagram illustrating a hardware example of a data processing device according to the second embodiment.

A data processing device 100 includes a processor 101, a DRAM 102, an HDD 103, a GPU 104, an input interface 105, a medium reader 106, and a communication interface 107. These units included in the data processing device 100 are coupled to a bus inside the data processing device 100.

The processor 101 is an arithmetic device that executes instructions of a program. For example, the processor 101 is a CPU. The processor 101 loads at least a part of programs and data stored in the HDD 103 into the DRAM 102, and executes the programs. The processor 101 may include a plurality of processor cores. The data processing device 100 may include a plurality of processors. A set of a plurality of processors is referred to as a "multiprocessor" or simply a "processor" in some cases. The processor may also be referred to as "processor circuitry".

The DRAM 102 is a volatile semiconductor memory that temporarily stores programs to be executed by the processor 101 and data to be used for arithmetic operation by the processor 101. The data processing device 100 may include a memory of a type other than the DRAM, and may include a plurality of memories.

The HDD 103 is a nonvolatile storage device that stores data and programs of software such as an operating system (OS), middleware, and application software. The data processing device 100 may include other types of storage devices such as a flash memory or a solid-state drive (SSD), and may include a plurality of nonvolatile storage devices.

The GPU 104 outputs an image to a display 51 coupled to the data processing device 100 in accordance with an instruction from the processor 101. As the display 51, an arbitrary type of display such as a cathode ray tube (CRT) display, a liquid crystal display (LCD), a plasma display, or an organic electro-luminescence (OEL) display may be used.

The input interface 105 acquires an input signal from an input device 52 coupled to the data processing device 100, and outputs the input signal to the processor 101. As the input device 52, a pointing device such as a mouse, a touch panel, a touchpad, or a trackball, a keyboard, a remote controller, a button switch, or the like may be used. A plurality of types of input devices may be coupled to the data processing device 100.

The medium reader 106 is a reading device that reads programs and data recorded in a recording medium 53. As the recording medium 53, for example, a magnetic disk, an optical disc, a magneto-optical (MO) disk, a semiconductor memory, or the like may be used. The magnetic disk includes a flexible disk (FD) and an HDD. The optical disc includes a compact disc (CD) and a Digital Versatile Disc (DVD).

For example, the medium reader 106 copies the programs and data read from the recording medium 53 to another recording medium such as the DRAM 102 or the HDD 103. For example, the read programs are executed by the processor 101. The recording medium 53 may be a portable type recording medium, and is used for distribution of programs and data in some cases. The recording medium 53 and the HDD 103 are referred to as a computer-readable recording medium in some cases.

The communication interface 107 is coupled to a network 54, and communicates with another information processing device via the network 54. The communication interface 107 may be a wired communication interface coupled to a wired communication device such as a switch or a router, or may be a wireless communication interface coupled to a wireless communication device such as a base station or an access point.

An accelerator card 108 is a hardware accelerator that searches for a solution to a discrete optimization problem. A discrete optimization problem is represented by formula (3) indicating the total energy of an Ising model. The number of constraint conditions, for example, constraint terms may be one or more.

The accelerator card 108 includes a processor 110 and a DRAM 120. For example, the processor 110 is a GPU, a DSP, an ASIC, an FPGA, or the like. The processor 110 includes an internal memory 111. For example, the internal memory 111 is an SRAM. The DRAM 120 stores data to be used for the processing of the processor 110.

The processor 110 is an example of the processing unit 12 of the first embodiment. The internal memory 111 is an example of the storage unit 11 of the first embodiment. The DRAM 120 is an example of the storage device 20 of the first embodiment. However, the functions of the data processing device 100 indicated below may be realized by the processor 101 executing a program stored in the DRAM 102. In such case, the processor 101 is an example of the processing unit 12, and the cache memory included in the processor 101 is an example of the storage unit 11. It may also be said that the accelerator card 108 or the processor 110 is an example of the data processing device 10 of the first embodiment.

A device used for solution finding of a problem formulated by an Ising-type evaluation function, such as the data processing device 100, the accelerator card 108, or the processor 110, is referred to as an Ising machine.

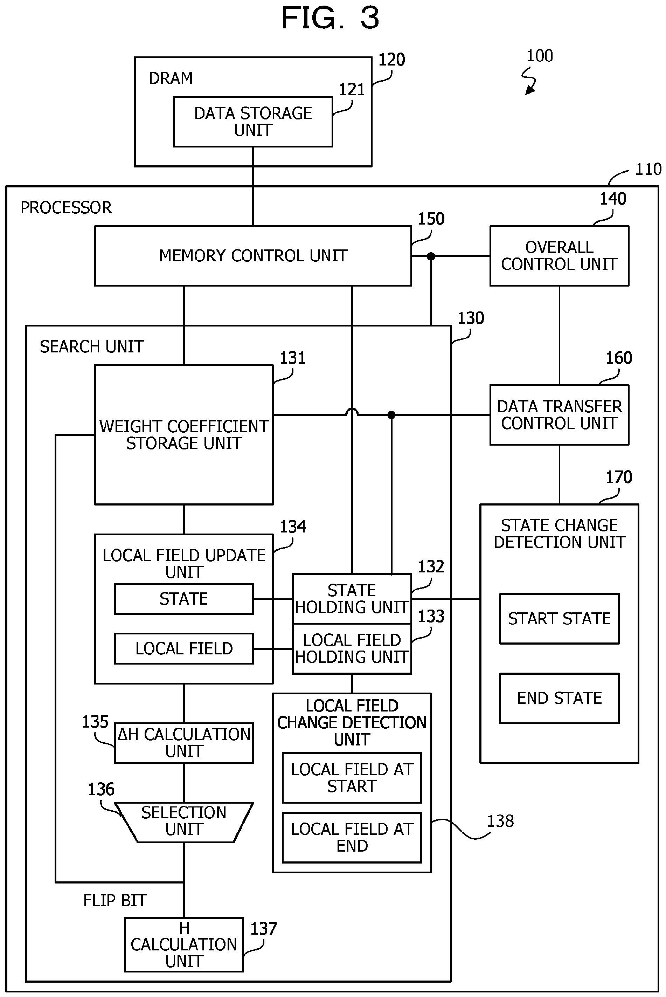

FIG. 3 is a diagram illustrating a function example of the data processing device.

The data processing device 100 includes a data storage unit 121, a search unit 130, an overall control unit 140, a memory control unit 150, a data transfer control unit 160, and a state change detection unit 170. A storage area of the DRAM 102 is used for the data storage unit 121.

In a case where the processor 110 is realized by an ASIC, an FPGA, or the like, the search unit 130, the overall control unit 140, the memory control unit 150, the data transfer control unit 160, and the state change detection unit 170 are realized by an electronic circuit such as the ASIC or the FPGA. For example, these functions may be realized by the processor 101 such as a CPU or a GPU executing a program stored in the DRAM 102.

The data storage unit 121 stores all of the weight coefficients used for solution finding of a discrete optimization problem. The data storage unit 121 stores local field information indicating the local fields ($h_i$) of all state variables and the local fields ($h_k$) corresponding to all constraint conditions included in the evaluation function of formula (3). State variable $x_i$ is referred to as a decision variable. In some cases, the data processing device 100 manages constraint conditions in association with binary variables. In such cases, a binary variable corresponding to a constraint condition is referred to as an auxiliary variable. For this reason, a local field corresponding to a constraint condition may also be referred to as a local field corresponding to an auxiliary variable. Information held in the data storage unit 121 is read according to the processing of the processor 110, and is stored in the internal memory 111.

The search unit 130 executes a solution search of a discrete optimization problem by using the simulated annealing (SA) method or the replica exchange method. The search unit 130 performs a solution search by switching windows to be searched. The search unit 130 includes a weight coefficient storage unit 131, a state holding unit 132, a local field holding unit 133, a local field update unit 134, a ΔH calculation unit 135, a selection unit 136, an H calculation unit 137, and a local field change detection unit 138. A storage area of the internal memory 111 is used for the weight coefficient storage unit 131, the state holding unit 132, and the local field holding unit 133.

The weight coefficient storage unit 131 stores a part of weight coefficients of all weight coefficients stored in the data storage unit 121. At the time of search processing, weight coefficients corresponding to the pairs of decision variables belonging to the current window and weight coefficients corresponding to the pairs of a decision variable belonging to the current window and each constraint condition are held in the weight coefficient storage unit 131 among all weight coefficients.

The state holding unit 132 holds state information indicating the values of a plurality of decision variables. The state information held in the state holding unit 132 is updated to the latest state according to a change in the values of decision variables.

The local field holding unit 133 holds a local field corresponding to a decision variable belonging to the current window and a local field corresponding to a constraint condition, which are read from the data storage unit 121. The local field information in the data storage unit 121 is updated to the latest state at the time of switching windows or the like.

The local field update unit 134 updates the local field of each decision variable belonging to the current window by formula (15) based on the weight coefficients stored in the weight coefficient storage unit 131. The local field update unit 134 updates the local field corresponding to a constraint condition by formula (16). The local field update unit 134 may execute these updates of local field in parallel. The local field update unit 134 updates the local field of each decision variable based on formula (17).

When the search processing for the current window ends, the local field update unit 134 performs update of the local field of a decision variable outside the window based on formulae (15) and (18).

When a search is started, the ΔH calculation unit 135 calculates an energy change ΔH corresponding to a change in the value of each decision variable in parallel based on formula (14), and outputs the energy change ΔH to the selection unit 136.

The selection unit 136 selects a decision variable for which a change in the value is permitted based on the energy change ΔH of each decision variable acquired from the ΔH calculation unit 135 and formula (7). When there is a plurality of decision variables for which a change in the value is permitted, for example, the selection unit 136 randomly selects one of the decision variables by using a random number. The decision variable selected by the selection unit 136 is referred to as a flip bit.

The selection unit 136 outputs information on a flip bit to the weight coefficient storage unit 131, and causes the weight coefficient corresponding to the flip bit to be output from the weight coefficient storage unit 131 to the local field update unit 134. Consequently, the local field of each decision variable is updated by the local field update unit 134. The selection unit 136 updates a state with the information on the flip bit. For example, the selection unit 136 updates the state held in the state holding unit 132 to the latest state. The selection unit 136 outputs ΔH corresponding to the flip bit to the H calculation unit 137.

The H calculation unit 137 calculates total energy H corresponding to the latest state based on $\Delta H$ supplied from the selection unit 136, and stores total energy H in the internal memory 111. The H calculation unit 137 calculates H corresponding to the latest state by adding up $\Delta H$ from the initial value of total energy H.

When the search processing of the current window ends, the local field change detection unit 138 acquires local field $h_{k\_before}$ at the start of the search processing and local field $h_{k\_after}$ at the end of the search processing, which are held in the local field holding unit 133. The local field change detection unit 138 detects the local field $h_k$ that has changed in the current search processing based on $h_{k\_before}$ and $h_{k\_after}$, and notifies the local field update unit 134. Consequently, the local field update unit 134 may perform update of the local field $h_i$ of a decision variable outside the window with respect to the changed local field $h_k$ based on formula (18).

The overall control unit 140 controls the search unit 130, the memory control unit 150, and the data transfer control unit 160. For example, the overall control unit 140 controls data transfer between the data storage unit 121 and the search unit 130 associated with switching of windows, and a solution search by the search unit 130.

The memory control unit 150 controls transfer of a weight coefficient from the data storage unit 121 to the weight coefficient storage unit 131 based on the control of the overall control unit 140. The memory control unit 150 controls transfer of a local field between the data storage unit 121 and the local field holding unit 133 based on the control of the overall control unit 140.

The data transfer control unit 160 instructs the memory control unit 150 on a weight coefficient to be read according to the processing of the search unit 130, and causes the weight coefficient storage unit 131 to read the weight coefficient to be read.

The state change detection unit 170 compares a state at the start of the search for the current window (start state) with a state at the end of the search for the window (end state), and identifies the presence or absence of a change in the value of each decision variable due to the current search. The state change detection unit 170 notifies the local field update unit 134 of bit change information indicating the presence or absence of a change in the value of each decision variable. The local field update unit 134 may perform update of the local field $h_i$ of a decision variable outside the window by formula (15) based on the bit change information supplied from the state change detection unit 170.

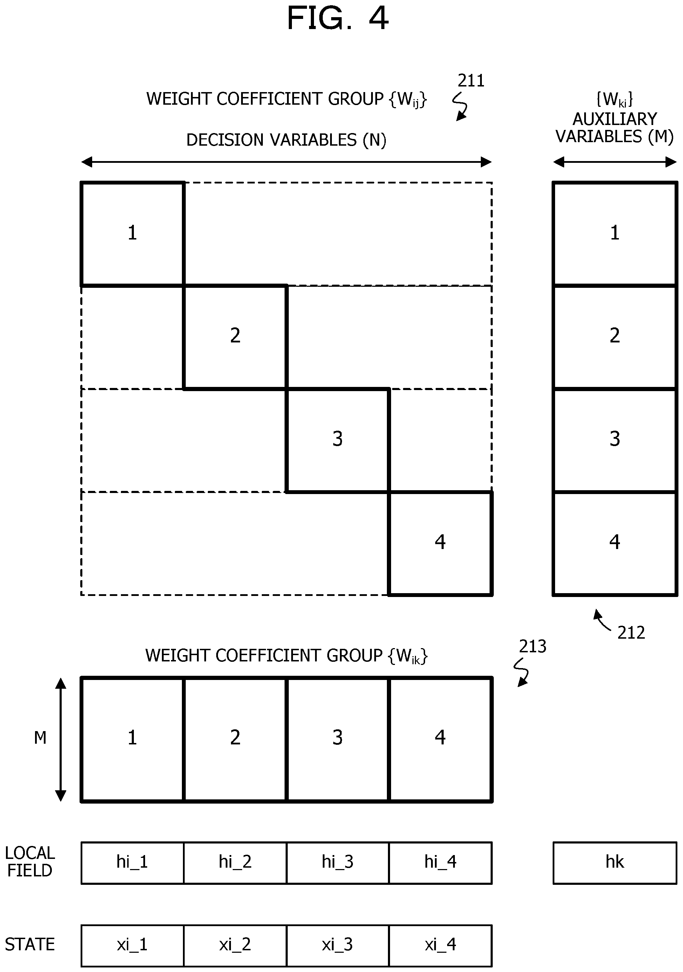

FIG. 4 is a diagram illustrating an example of weight coefficient groups.

A weight coefficient group 211 is represented as $\{W_{ij}\}$. $\{W_{ij}\}$ is a set of weight coefficients between N decision variables. A weight coefficient group 212 is represented as $\{W_{ki}\}$. A weight coefficient group 213 is represented as $\{W_{ik}\}$. The weight coefficient groups 212 and 213 are sets of weight coefficients between each of the N decision variables and each of M auxiliary variables (M constraint conditions). It may be $W_{ki} = W_{ik}$, or it may be $W_{ki} \neq W_{ik}$. All of $\{W_{ij}\}$, $\{W_{ki}\}$, and $\{W_{ik}\}$ are held in the data storage unit 121.

In the weight coefficient groups 211, 212, and 213 of FIG. 4, the direction from left to right in the drawing is a direction from a smaller index to a larger index, and the direction from top to bottom is a direction from a smaller index to a larger index.

In FIG. 4, numbered portions are illustrated in each of $\{W_{ij}\}$, $\{W_{ki}\}$, and $\{W_{ik}\}$. The numbers correspond to identification numbers of windows. In the example of FIG. 4, all of the N decision variables are separated into four windows. Portions with the same numbers in each of $\{W_{ij}\}$, $\{W_{ki}\}$, and $\{W_{ik}\}$ are portions held in the weight coefficient storage unit 131 at the time of search processing of the search unit 130.

As illustrated in FIG. 4, the data processing device 100 separates the N decision variables into a plurality of partial regions (windows), and slides the partial regions and scans all of the partial regions. All of the auxiliary variables coupled to the decision variables in the partial regions are processed during the search of the partial regions.

For example, for search processing, weight coefficients are sequentially read from the data storage unit 121 into the weight coefficient storage unit 131 in such order as [1, 1], [2, 2], [3, 3], [4, 4], [1, 1], and so on, for each region of weight coefficients corresponding to each of [decision variables, auxiliary variables].

hi_1, hi_2, hi_3, and hi_4 indicate local fields of each decision variable belonging to windows 1 to 4, respectively. hk indicates a local field corresponding to each of the M auxiliary variables. hi_1, hi_2, hi_3, hi_4, and hk are held in the local field holding unit 133.

xi_1, xi_2, xi_3, and xi_4 indicate sets of values of decision variables (states) corresponding to windows 1 to 4, respectively. xi_1, xi_2, xi_3, and xi_4 are held in the state holding unit 132.

As described before, during search processing, only hi_w and xi_w corresponding to the present window w among xi_1 to xi_4 and hi_1 to hi_4 may be held in each of the state holding unit 132 and the local field holding unit 133.

Next, a search processing example for each window by the data processing device 100 will be described.

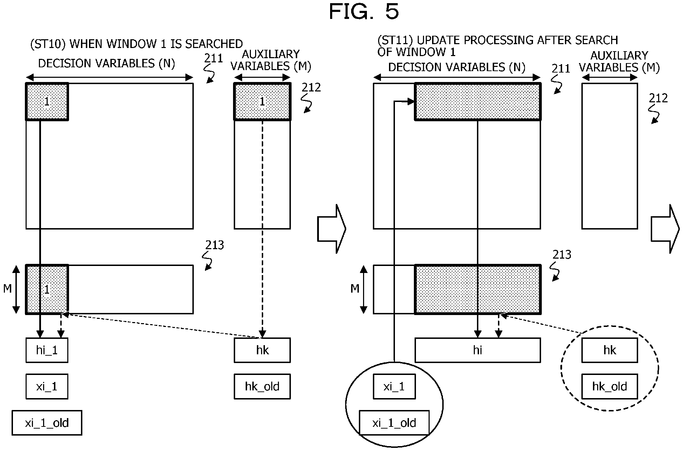

FIG. 5 is a diagram illustrating the search processing example.

The search unit 130 performs search processing for window 1 (step ST10).

In step ST10, the search unit 130 holds, in the weight coefficient storage unit 131, weight coefficients in the weight coefficient group 211 corresponding to pairs of decision variables in window 1. The search unit 130 holds, in the weight coefficient storage unit 131, weight coefficients in the weight coefficient groups 212 and 213 corresponding to pairs of decision variables and auxiliary variables of window 1. The state holding unit 132 holds the latest xi_1. The local field holding unit 133 holds hi_1 and hk.

The state holding unit 132 also holds xi_1_old. xi_1_old is the state xi_1 at the start of the search of step ST10. The local field holding unit 133 also holds hk_old. hk_old is the local field hk at the start of the search of step ST10.

In step ST10, the search unit 130 repeatedly performs the search processing based on the weight coefficients and local fields related to each of the decision variables and auxiliary variables in window 1. The search unit 130 updates xi_1 and hi_1 based on the weight coefficients corresponding to the pairs of decision variables of window 1 according to a change in the value of a decision variable in window 1. The update of hi_1 is performed based on formula (15). At the same time, the search unit 130 updates hk based on the weight coefficients corresponding to the pairs of decision variables and auxiliary variables of window 1. The update of hk is performed based on formula (16). The search unit 130 updates hi_1 based on hk before and after update. The update of hi_1 based on hk before and after update is performed based on formula (17).

When the search processing for window 1 ends, the search unit 130 performs update processing after the search of window 1 (step ST11).

In step ST11, the search unit 130 sequentially reads, into the weight coefficient storage unit 131, weight coefficients in the weight coefficient group 211 corresponding to pairs of decision variables of window 1 and decision variables outside window 1. The search unit 130 sequentially reads, into the weight coefficient storage unit 131, weight coefficients ($W_{ik}$) in the weight coefficient groups 212 and 213 corresponding to pairs of decision variables and auxiliary variables outside window 1.

The search unit 130 performs update of the local field $h_i$ of decision variables outside window 1 based on the weight coefficients in the weight coefficient group 211 corresponding to pairs of decision variables of window 1 and decision variables outside window 1 and information on a decision variable whose value has changed in the search of window 1. This update is performed based on formula (15). The decision variable whose value has changed is extracted by comparison between xi_1_old and xi_1. At the same time, the search unit 130 performs update of the local field hi of decision variables outside window 1 by formula (18) with hk_old = {$h_{k\_before}$} and the present hk = {$h_{k\_after}$}.

The search unit 130 proceeds to search processing for window 2.

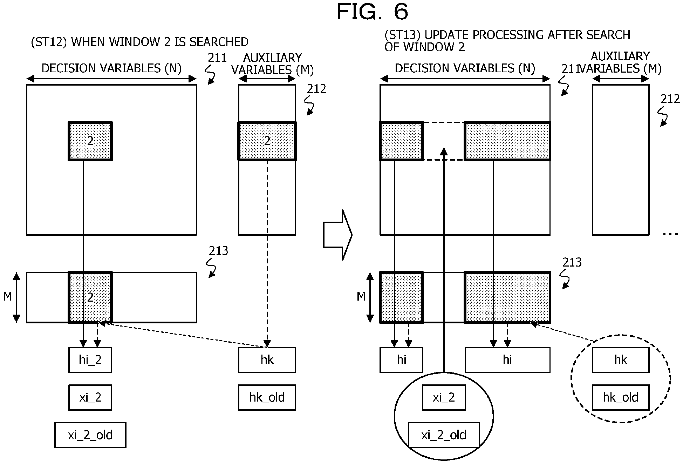

FIG. 6 is a diagram illustrating a continuation of the search processing example.

The search unit 130 performs the search processing for window 2 (step ST12).

In step ST12, the search unit 130 holds, in the weight coefficient storage unit 131, weight coefficients in the weight coefficient group 211 corresponding to pairs of decision variables in window 2. The search unit 130 holds, in the weight coefficient storage unit 131, weight coefficients in the weight coefficient groups 212 and 213 corresponding to pairs of decision variables and auxiliary variables of window 2. The state holding unit 132 holds the latest xi_2. The local field holding unit 133 holds hi_2 and hk.

The state holding unit 132 also holds xi_2_old. xi_2_old is the state xi_2 at the start of the search of step ST12. The local field holding unit 133 also holds hk_old. hk_old is the local field hk at the start of the search of step ST12.

In step ST12, the search unit 130 repeatedly performs the search processing based on the weight coefficients and local fields related to each of the decision variables and auxiliary variables in window 2. The search unit 130 updates xi_2 and hi_2 based on the weight coefficients corresponding to the pairs of decision variables of window 2 according to a change in the value of a decision variable in window 2. The update of hi_2 is performed based on formula (15). At the same time, the search unit 130 updates hk based on the weight coefficients corresponding to the pairs of decision variables and auxiliary variables of window 2. The update of hk is performed based on formula (16). The search unit 130 updates hi_2 based on hk before and after update. The update of hi_2 based on hk before and after update is performed based on formula (17).

When the search processing for window 2 ends, the search unit 130 performs update processing after the search of window 2 (step ST13).

In step ST13, the search unit 130 sequentially reads, into the weight coefficient storage unit 131, weight coefficients in the weight coefficient group 211 corresponding to pairs of decision variables of window 2 and decision variables outside window 2. The search unit 130 sequentially reads, into the weight coefficient storage unit 131, weight coefficients in the weight coefficient groups 212 and 213 corresponding to pairs of decision variables and auxiliary variables outside window 2.

The search unit 130 performs update of the local field hi of decision variables outside window 2 based on the weight coefficients in the weight coefficient group 211 corresponding to pairs of decision variables of window 2 and decision variables outside window 2 and information on a decision variable whose value has changed in the search of window 2. This update is performed based on formula (15). The decision variable whose value has changed is extracted by comparison between xi_2_old and xi_2. At the same time, the search unit 130 performs update of the local field hi of decision variables outside window 2 by formula (18) with hk_old = {$h_{k\_before}$} and the present hk = {$h_{k\_after}$}.

The search unit 130 proceeds to search processing for window 3. Thereafter, search processing and update processing after the search are similarly performed for windows 3 and 4, and, for example, a search of each window is sequentially performed in such order as windows 1, 2, 3, 4, 1, 2, and so on.

Next, an example of a processing procedure by the data processing device 100 will be described. Hereinafter, a case will be exemplified in which the data processing device 100 uses the replica exchange method. The search unit 130 functions as a plurality of replicas. A different temperature value is set for each of the plurality of replicas.

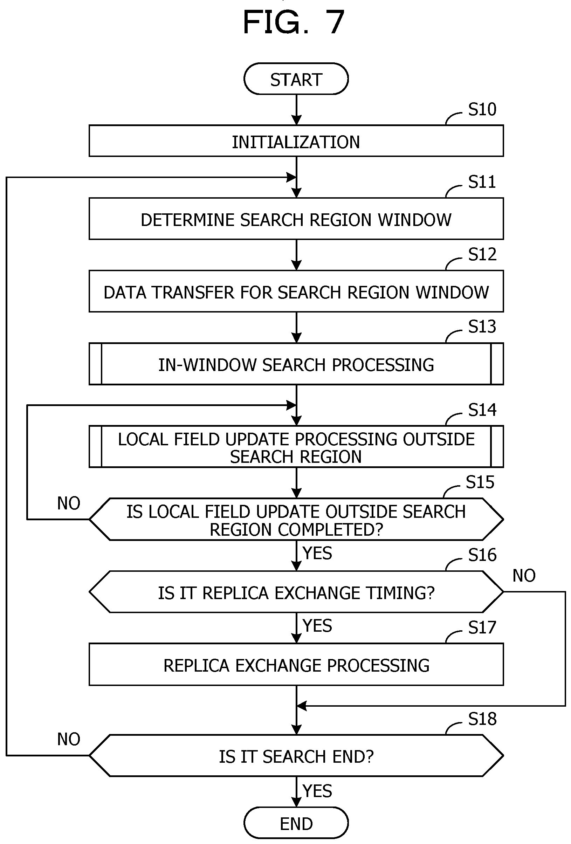

FIG. 7 is a flowchart illustrating an example of overall processing.

(S10) The overall control unit 140 performs initialization of the search unit 130.

(S11) The overall control unit 140 determines the next search region window.

(S12) The data transfer control unit 160 performs data transfer for the search region window using the memory control unit 150. Data to be transferred from the DRAM 102 to the internal memory 111 includes weight coefficients corresponding to pairs of decision variables belonging to the next search region window and weight coefficients corresponding to pairs of the decision variables and auxiliary variables (constraint conditions). Data to be transferred from the DRAM 102 to the internal memory 111 includes state information for each replica that indicates the value of each state variable for the next search region window after the end of the previous search. The data includes local fields of decision variables belonging to the search region window and local fields of auxiliary variables.

(S13) The search unit 130 performs in-window search processing for each replica. Details of the in-window search processing will be described later.

(S14) The search unit 130 performs local field update processing outside a search region. Details of the local field update processing outside a search region will be described later.

(S15) The search unit 130 determines whether the local field update processing outside a search region is completed. When the local field update processing outside a search region is completed, the processing proceeds to step S16. When the local field update processing outside a search region is not completed, the processing proceeds to step S14.

(S16) The search unit 130 determines whether the current time point is the timing at which replica exchange is performed, for example, the replica exchange timing. When the current time point is the replica exchange timing, the processing proceeds to step S17. When the current time point is not the replica exchange timing, the processing proceeds to step S18.

(S17) The search unit 130 performs replica exchange processing. Consequently, for example, exchange of temperature values or exchange of states is performed between the replicas based on a predetermined probability.

(S18) The overall control unit 140 determines whether it is search end. When it is search end, the search processing ends. When it is not search end, the processing proceeds to step S11. For example, the overall control unit 140 determines that it is search end when a series of procedures of steps S11 to S17 is executed a predetermined number of times or for a predetermined time. For example, when the search ends, the overall control unit 140 outputs a solution having the minimum energy among the solutions obtained up to that point.

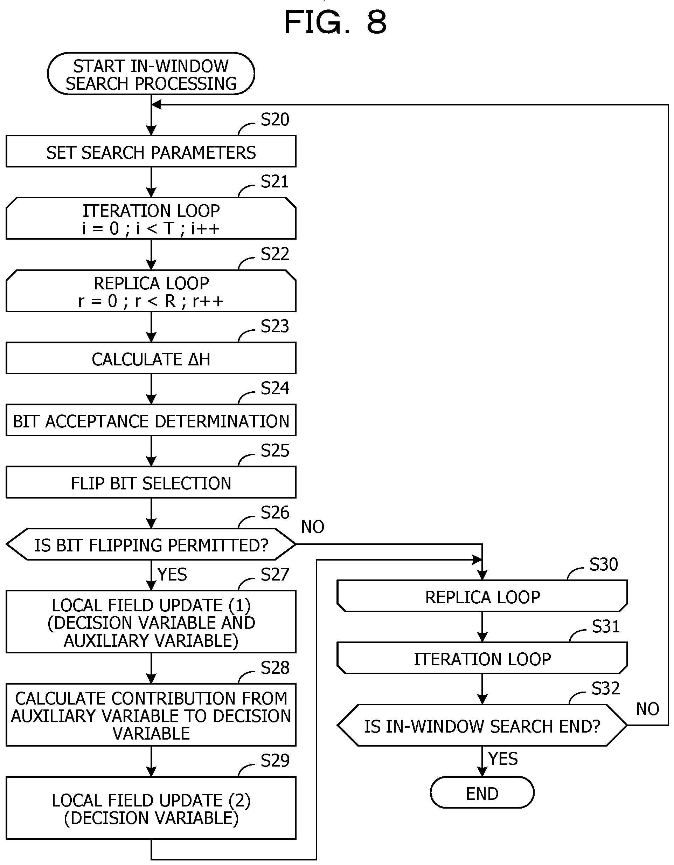

FIG. 8 is a flowchart illustrating an example of the in-window search processing.

The in-window search processing corresponds to step S13.

(S20) The overall control unit 140 sets search parameters in the search unit 130. The search parameters include a temperature value to be used for the search, the number of all iterations T, and the like.

(S21) The search unit 130 repeatedly executes steps S22 to S30 for the number of iterations i. The initial value of i is 0. i is incremented by 1 until the number of all iterations T is reached.

(S22) The search unit 130 executes steps S23 to S29 for each replica. The number of replicas is R. For example, the search unit 130 may execute steps S23 to S29 for each replica by a pipeline.

(S23) The search unit 130 calculates $\Delta H$ related to each decision variable based on formula (14). The calculation of $\Delta H$ is executed for each decision variable in parallel.

(S24) The search unit 130 performs bit acceptance determination based on formula (7).

(S25) The search unit 130 performs flip bit selection based on a result of bit acceptance determination. When there is a plurality of decision variables for which a change is permitted in the result of bit acceptance determination, for example, the search unit 130 selects one of the decision variables by using a random number.

(S26) The search unit 130 determines whether bit flipping is permitted. When bit flipping is permitted, for example, a flip bit is selected in step S25, the processing proceeds to step S27. When bit flipping is not permitted, the processing proceeds to step S30. For example, when there is no decision variable for which a change is permitted in the bit acceptance determination of step S24, bit flipping is not permitted. When a flip bit is selected, the search unit 130 reflects, in the state, a change in the value of a decision variable to be flipped, and updates total energy H based on $\Delta H$ corresponding to the decision variable.

(S27) The search unit 130 performs local field update (1). For example, the search unit 130 updates the local field of a decision variable in the current window by formula (15) and updates the local field of an auxiliary variable by formula (16), using the weight coefficients for current window search held in the weight coefficient storage unit 131.

(S28) The search unit 130 calculates contribution from the auxiliary variable to the decision variable.

(S29) The search unit 130 performs local field update (2). For example, the search unit 130 updates the local field of the decision variable by formula (17) based on the contribution calculated in step S28.

(S30) When the processing of the current iteration is completed for all replicas, the search unit 130 advances the processing to step S31.

(S31) When the processing of all iterations is completed, the search unit 130 advances the processing to step S32.

(S32) The search unit 130 determines whether the in-window search processing for the current window has ended. When the in-window search processing for the current window has ended, the in-window search processing ends. When the in-window search processing for the current window has not ended, the processing proceeds to step S20. For example, the search unit 130 determines that the in-window search processing has ended when steps S20 to S31 are executed a predetermined number of times or for a predetermined time.

In the selection of a flip bit in steps S23 to S25, bits to be flipped may be selected based on formula (7) by sequentially or randomly selecting the bits one by one, or the rejection-free method may be used. In the case where the rejection-free method is used, as described before, the search unit 130 performs the flip determination based on formula (7) for the plurality of bits in parallel, selects any bit from the bits that have been determined that flipping is permitted, and flips the bit.

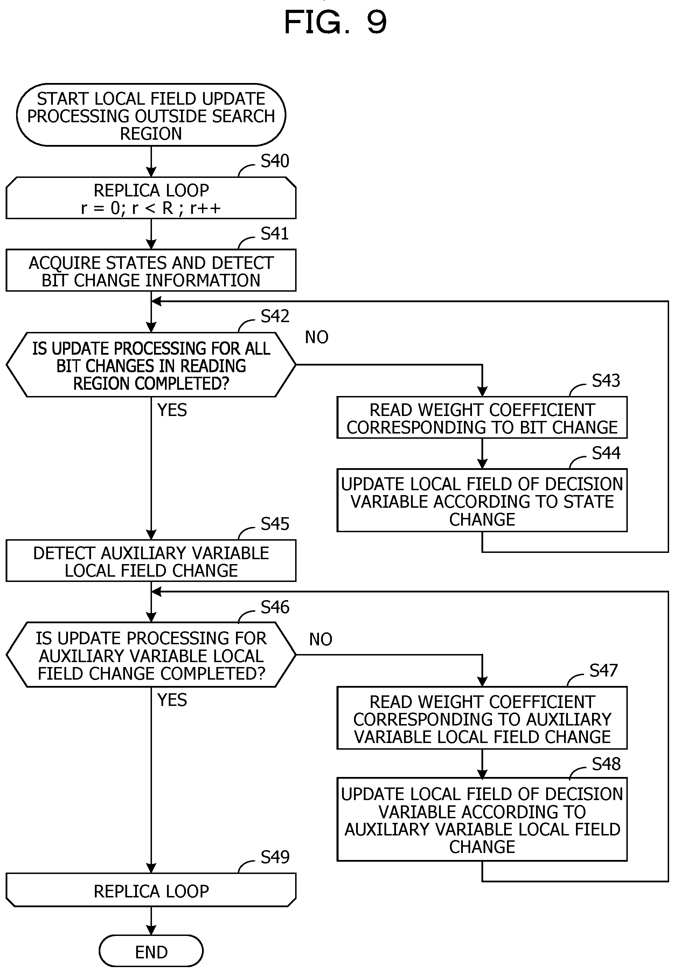

FIG. 9 is a flowchart illustrating an example of the local field update processing outside a search region.

The local field update processing outside a search region corresponds to step S14.

(S40) The search unit 130 executes steps S41 to S48 for each replica. The number of replicas is R. The search unit 130 may execute steps S41 to S48 for each replica by a pipeline.

(S41) The state change detection unit 170 acquires a start state and an end state of the search processing of step S13. The state change detection unit 170 detects bit change information by comparison between the start state and the end state, and notifies the search unit 130 of the bit change information.

(S42) The search unit 130 determines whether update processing of a local field for all bit changes in the reading region is completed. When the update processing is completed, the processing proceeds to step S45. When the update processing is not completed, the processing proceeds to step S43.

(S43) The search unit 130 reads, from the data storage unit 121 to the weight coefficient storage unit 131, a weight coefficient in the weight coefficient group 211 corresponding to the bit change indicated by the bit change information.

(S44) The search unit 130 performs update of the local field of a decision variable outside the window according to the state change based on formula (15). The processing proceeds to step S42.

(S45) The search unit 130 detects a change in the local field of auxiliary variable by comparing the local field of auxiliary variable at the start of the search processing of step S13 and the local field of auxiliary variable at the end. The detection of a change in the local field of auxiliary variable is performed by the local field change detection unit 138 of the search unit 130.

(S46) The search unit 130 determines whether update processing of a local field for the auxiliary variable local field change is completed. When the update processing is completed, the processing proceeds to step S49. When the update processing is not completed, the processing proceeds to step S47.

(S47) The search unit 130 reads, from the data storage unit 121 to the weight coefficient storage unit 131, a weight coefficient in the weight coefficient group 213 corresponding to the auxiliary variable local field change.

(S48) The search unit 130 performs update of the local field of a decision variable outside the window according to the auxiliary variable local field change based on formula (18). The processing proceeds to step S46.

(S49) When the update of the local field of a decision variable outside the window is completed for all replicas, the search unit 130 ends the local field update processing outside a search region.

In this way, according to the data processing device 100 of the second embodiment, it is possible to reduce the size of the weight coefficients held in the weight coefficient storage unit 131 at the time of search processing. Consequently, the data processing device 100 may save the memory use amount of the internal memory 111. Arithmetic resources for the search processing of the processor 110 may be reduced by narrowing down the target of search processing to a part of all decision variables. Consequently, the data processing device 100 may efficiently execute solution finding of a large-scale discrete optimization problem including a constraint condition by using relatively small calculation resources.

[Third Embodiment]

Next, a third embodiment will be described. Items different from the aforementioned second embodiment will be mainly described, and description of the common items will be omitted.

In the third embodiment, the data processing device 100 provides a function of separating and processing M auxiliary variables, for example, M constraint conditions.

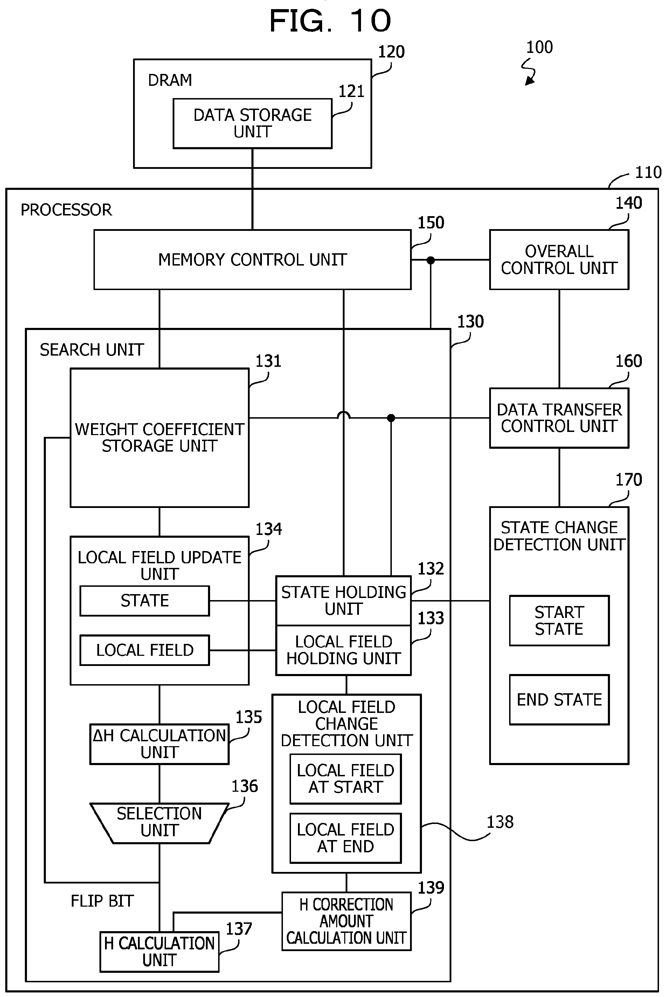

FIG. 10 is a diagram illustrating a function example of the data processing device of the third embodiment.

The data processing device 100 of the third embodiment is different in that an H correction amount calculation unit 139 is included in addition to the functions exemplified in FIG. 3.

In the third embodiment, the update of local field of formula (16) is performed only for a part of constraint conditions during in-window search processing. The local field update unit 134 updates the local fields corresponding to the other constraint conditions by formula (16) according to a change in the value of an in-window decision variable after the in-window search processing. After that, the local field update unit 134 updates the local field of an out-of-window decision variable by formula (18) based on the local fields before and after update corresponding to all constraint conditions. The local field update unit 134 also performs correction of the local field of an in-window decision variable by formula (18) based on the local fields before and after update corresponding to the other constraint conditions.

Since the update of local field of formula (16) is performed only for a part of constraint conditions during in-window search processing, an error is generated in total energy H calculated by the H calculation unit 137 during the in-window search processing. For this reason, when the in-window search processing ends, the H correction amount calculation unit 139 corrects the error of H. For example, it is as follows.

In the case where auxiliary variables are window-separated, the original $h_i$ used in the energy difference formula of formula (14) is represented by formula (19).

$$h_i = \left( \sum_{j \in D} W_{ij} x_j + b_i \right) \\ - \sum_{k \in A_i} \lambda_k \Delta g(h_k, W_{ki} \Delta x_i) - \sum_{k \in A_o} \lambda_k \Delta g(h_k, W_{ki} \Delta x_i) \qquad (19)$$

$A_i$ is a set of indices of auxiliary variables for which weight coefficients are to be read into the weight coefficient storage unit 131 in certain in-window search processing. $A_o$ is a set of indices of auxiliary variables for which weight coefficients are not to be read into the weight coefficient storage unit 131 in the in-window search processing.

However, in the in-window search processing of the third embodiment, since penalty contribution of an auxiliary variable outside the window is not reflected in the local field of a decision variable, $h'_i$ used in the energy difference formula of formula (14) is represented by formula (20).

$$h'_i = \left( \sum_{j \in D} W_{ij} x_j + b_i \right) - \sum_{k \in A_i} \lambda_k \Delta g(h_k, W_{ki} \Delta x_i) \qquad (20)$$

For example, with respect to $h'_i$ used when an energy difference is obtained, the third term on the right side of formula (19) is an error, and the error is reflected in total energy H calculated by the H calculation unit 137 during the in-window search processing. The H correction amount calculation unit 139 corrects the error included in H.

The H correction amount calculation unit 139 calculates a difference $\Delta h_i$ between the local field $h'_i$ used for energy difference calculation in the in-window search processing and the original local field $h_i$. $\Delta h_i$ is represented by formula (21).

$$\Delta h_i = h_i - h'_i = - \sum_{k \in A_o} \lambda_k \Delta g(h_k, W_{ki} \Delta x_i) \qquad (21)$$

This calculation for correction has to be performed only for the local field of a decision variable that has changed during the in-window search processing. For example, when the changed decision variable is 10 bits, the H correction amount calculation unit 139 calculates $\Delta h_i$ of 10 bits for each 1-bit change in the order of the changed decision variables for the corresponding local field of 10 bits, and accumulates the change amount as indicated by formula (22).

$$\sum \Delta h_i + = \Delta h_i \qquad (22)$$

The H correction amount calculation unit 139 corrects H with delta_$\Delta H_i$ represented by formula (23) using the corresponding $\Delta h_i$ in the order used for the energy difference calculation.

$$delta\_\Delta H_i = - \left( \sum \Delta h_i \right) \Delta x_i \qquad (23)$$

For example, the H correction amount calculation unit 139 performs calculation of $\Delta h_i$ for each 1-bit flip processing, and accumulates the deviation from the out-of-window auxiliary variables. The H correction amount calculation unit 139 corrects H using delta_$\Delta H_i$ for i used for the energy difference calculation for each 1-bit flip processing.

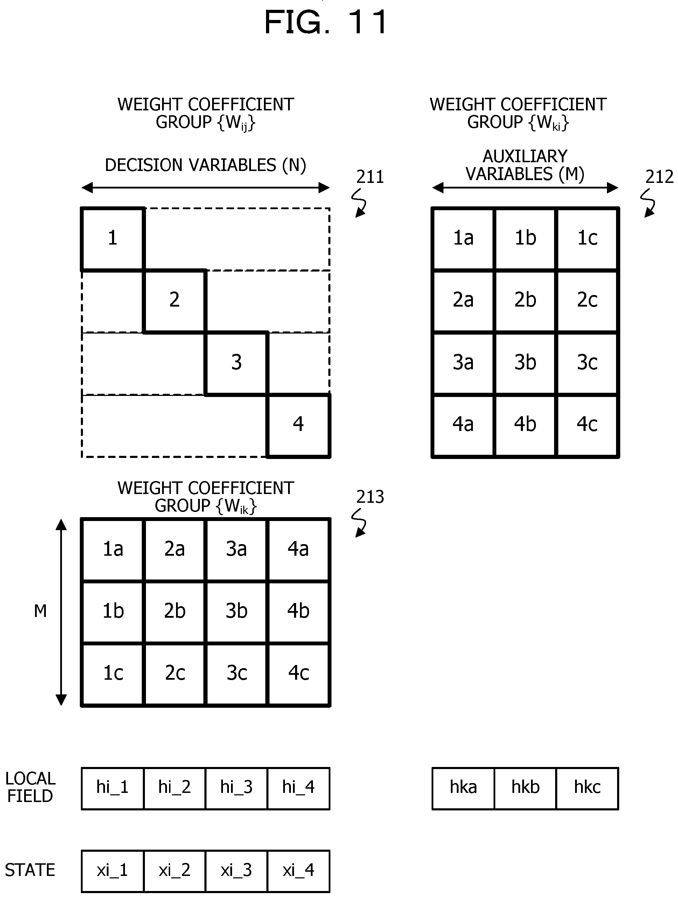

FIG. 11 is a diagram illustrating an example of weight coefficient groups.

In FIG. 11, numbered portions are illustrated in each of $\{W_{ij}\}$, $\{W_{ki}\}$, and $\{W_{ik}\}$. The numbers correspond to identification numbers of windows. In the example of FIG. 11, all of N decision variables are separated into four windows. M auxiliary variables corresponding to each window of decision variables are separated into three windows. For example, windows 1a, 1b, and 1c of auxiliary variables correspond to window 1 of decision variables. Windows 2a, 2b, and 2c of auxiliary variables correspond to window 2 of decision variables. Windows 3a, 3b, and 3c of auxiliary variables correspond to window 3 of decision variables. Windows 4a, 4b, and 4c of auxiliary variables correspond to window 4 of decision variables.

The same auxiliary variables belong to windows 1a, 2a, 3a, and 4a. The same auxiliary variables belong to windows 1b, 2b, 3b, and 4b. The same auxiliary variables belong to windows 1c, 2c, 3c, and 4c.

In the third embodiment, the data processing device 100 separates the decision variables and the auxiliary variables into a plurality of partial regions (windows), and slides the partial regions and scans the all of the partial regions. After sliding all windows of auxiliary variables for one window of decision variables, the data processing device 100 slides the window of decision variables.

For example, for search processing, weight coefficients are sequentially read from the data storage unit 121 into the weight coefficient storage unit 131 in such order as [1, 1a], [1, 1b], [1, 1c], [2, 2a], [2, 2b], [2, 2c], [3, 3a], [3, 3b], [3, 3c], [4, 4a], [4, 4b], [4, 4c], [1, 1a], and so on, for each region of weight coefficients corresponding to each of [decision variables, auxiliary variables].

hi_1, hi_2, hi_3, and hi_4 indicate local fields of each decision variable belonging to windows 1 to 4, respectively. hka, hkb, and hkc indicate local fields of each auxiliary variable belonging to windows 1a, 1b, and 1c, respectively. hi_1, hi_2, hi_3, hi_4, hka, hkb, and hkc are held in the local field holding unit 133. States xi_1, xi_2, xi_3, and xi_4 are held in the state holding unit 132.

During search processing, only those corresponding to the present window among xi_1 to xi_4, hi_1 to hi_4, and hka to hkc may be held in each of the state holding unit 132 and the local field holding unit 133.

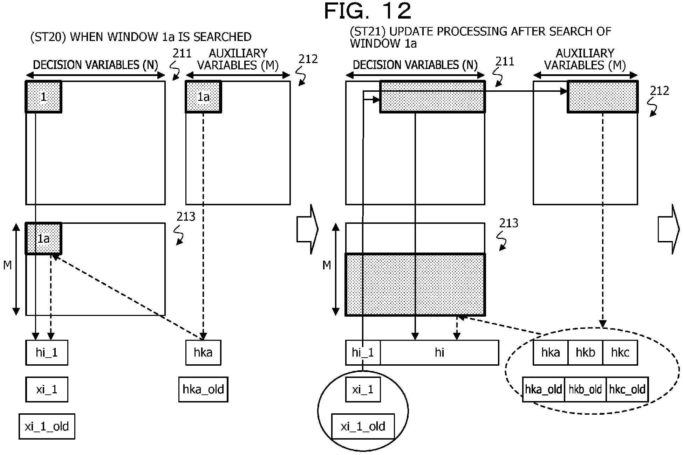

FIG. 12 is a diagram illustrating an example of search processing.

The search unit 130 performs search processing for window 1a (step ST20). It may be said that the search processing for window 1a is search processing for windows 1 and 1a.

In step ST20, the search unit 130 holds, in the weight coefficient storage unit 131, weight coefficients in the weight coefficient group 211 corresponding to pairs of decision variables in window 1. The search unit 130 holds, in the weight coefficient storage unit 131, weight coefficients in the weight coefficient groups 212 and 213 corresponding to pairs of decision variables of window 1 and auxiliary variables of window 1a. The state holding unit 132 holds the latest xi_1. The local field holding unit 133 holds hi_1 and hka.

The state holding unit 132 also holds xi_1_old. xi_1_old is the state xi_1 at the start of the search of step ST20. The local field holding unit 133 also holds hka_old. hka_old is the local field hka at the start of the search of step ST20.

In step ST20, the search unit 130 repeatedly performs the search processing based on the weight coefficients and local fields related to each of the decision variables in window 1 and the auxiliary variables in window 1a. The search unit 130 updates xi_1 and hi_1 based on the weight coefficients corresponding to the pairs of decision variables of window 1 according to a change in the value of a decision variable in window 1. The update of hi_1 is performed based on formula (15). At the same time, the search unit 130 updates hka based on the weight coefficients corresponding to the pairs of decision variables and auxiliary variables of window 1. The update of hka is performed based on formula (16). The search unit 130 updates hi_1 based on hka before and after update. The update of hi_1 based on hka before and after update is performed based on formula (17).

When the search processing for window 1a ends, the search unit 130 performs update processing after the search in window 1a (step ST21).

In step ST21, the search unit 130 sequentially reads, into the weight coefficient storage unit 131, weight coefficients in the weight coefficient group 211 corresponding to pairs of decision variables of window 1 and decision variables outside window 1. The search unit 130 sequentially reads, into the weight coefficient storage unit 131, weight coefficients in the weight coefficient group 212 corresponding to pairs of decision variables of window 1 and auxiliary variables outside window 1a. The search unit 130 sequentially reads, into the weight coefficient storage unit 131, weight coefficients in the weight coefficient group 213 corresponding to pairs of decision variables and auxiliary variables outside window 1a.

The search unit 130 performs update of the local field hi of decision variables outside window 1 based on the weight coefficients in the weight coefficient group 211 corresponding to pairs of decision variables of window 1 and decision variables outside window 1 and information on a decision variable whose value has changed in the search of window 1. This update is performed based on formula (15). The decision variable whose value has changed is extracted by comparison between xi_1_old and xi_1.

The search unit 130 performs update of the local fields hkb and hkc of auxiliary variables outside window 1a based on the weight coefficients in the weight coefficient group 212 corresponding to pairs of decision variables of window 1 and auxiliary variables outside window 1a and the information on a decision variable whose value has changed in the search of window 1. This update is performed based on formula (16). At this time, the search unit 130 holds hkb and hkc before the update as hkb_old and hkc_old, respectively.

The search unit 130 performs update of the local field hi of decision variables outside window 1 by formula (18) with hka_old, hkb_old, and hkc_old as $\{h_{k\_before}\}$ and the present hka, hkb, and hkc as $\{h_{k\_after}\}$.

The search unit 130 performs correction of the local field hi_1 of decision variables in window 1 by formula (18) with hkb_old and hkc_old as $\{h_{k\_before}\}$ and the present hkb and hkc as $\{h_{k\_after}\}$.

The search unit 130 also performs correction of total energy H by formula (23).

The search unit 130 proceeds to search processing for window 1b.

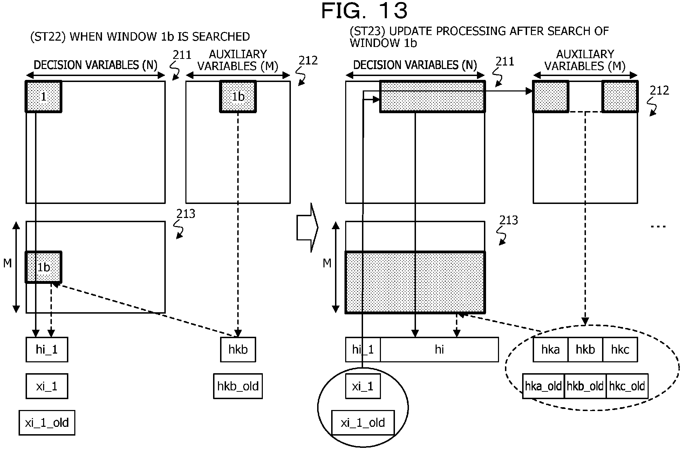

FIG. 13 is a diagram illustrating a continuation of the example of search processing.

The search unit 130 performs the search processing for window 1b (step ST22). It may be said that the search processing for window 1b is search processing for windows 1 and 1b.

In step ST22, the search unit 130 holds, in the weight coefficient storage unit 131, weight coefficients in the weight coefficient group 211 corresponding to pairs of decision variables in window 1. The search unit 130 holds, in the weight coefficient storage unit 131, weight coefficients in the weight coefficient groups 212 and 213 corresponding to pairs of decision variables of window 1 and auxiliary variables of window 1b. The state holding unit 132 holds the latest xi_1. The local field holding unit 133 holds hi_1 and hkb.

The state holding unit 132 also holds xi_1_old. xi_1_old is the state xi_1 at the start of the search of step ST22. The local field holding unit 133 also holds hkb_old. hkb_old is the local field hkb at the start of the search of step ST22.

In step ST22, the search unit 130 repeatedly performs the search processing based on the weight coefficients and local fields related to each of the decision variables in window 1 and the auxiliary variables in window 1b. The search unit 130 updates xi_1 and hi_1 based on the weight coefficients corresponding to the pairs of decision variables of window 1 according to a change in the value of a decision variable in window 1. The update of hi_1 is performed based on formula (15). At the same time, the search unit 130 updates hkb based on the weight coefficients corresponding to the pairs of decision variables and auxiliary variables of window 1. The update of hkb is performed based on formula (16). The search unit 130 updates hi_1 based on hkb before and after update. The update of hi_1 based on hkb before and after update is performed based on formula (17).

When the search processing for window 1b ends, the search unit 130 performs update processing after the search in window 1b (step ST23).

In step ST23, the search unit 130 sequentially reads, into the weight coefficient storage unit 131, weight coefficients in the weight coefficient group 211 corresponding to pairs of decision variables of window 1 and decision variables outside window 1. The search unit 130 sequentially reads, into the weight coefficient storage unit 131, weight coefficients in the weight coefficient group 212 corresponding to pairs of decision variables of window 1 and auxiliary variables outside window 1b. The search unit 130 sequentially reads, into the weight coefficient storage unit 131, weight coefficients in the weight coefficient group 213 corresponding to pairs of decision variables and auxiliary variables outside window 1b.

The search unit 130 performs update of the local field hi of decision variables outside window 1 based on the weight coefficients in the weight coefficient group 211 corresponding to pairs of decision variables of window 1 and decision variables outside window 1 and information on a decision variable whose value has changed in the search of window 1. This update is performed based on formula (15). The decision variable whose value has changed is extracted by comparison between xi_1_old and xi_1.

The search unit 130 performs update of the local fields hka and hkc of auxiliary variables outside window 1b based on the weight coefficients in the weight coefficient group 212 corresponding to pairs of decision variables of window 1 and auxiliary variables outside window 1b and the information on a decision variable whose value has changed in the search of window 1. This update is performed based on formula (16). At this time, the search unit 130 holds hka and hkc before the update as hka_old and hkc_old, respectively.

The search unit 130 performs update of the local field hi of decision variables outside window 1 by formula (18) with hka_old, hkb_old, and hkc_old as $\{h_{k\_before}\}$ and the present hka, hkb, and hkc as $\{h_{k\_after}\}$.

The search unit 130 performs correction of the local field hi_1 of decision variables in window 1 by formula (18) with hka_old and hkc_old as $\{h_{k\_before}\}$ and each of the present hka and hkc as $\{h_{k\_after}\}$.

The search unit 130 also performs correction of total energy H by formula (23).

Next, an example of a processing procedure by the data processing device 100 will be described. Since overall processing and in-window search processing by the data processing device 100 of the third embodiment are similar to the procedures exemplified in FIGs. 7 and 8, respectively, description thereof will be omitted.

However, in the data transfer in step S12 of FIG. 7, weight coefficients and local fields corresponding to any of windows 1a, 1b, and so on to be searched are read from the data storage unit 121 into the search unit 130 with respect to auxiliary variables. In the calculation of ∆H in step S23 of FIG. 8, $h_i'$ of formula (20) is used.

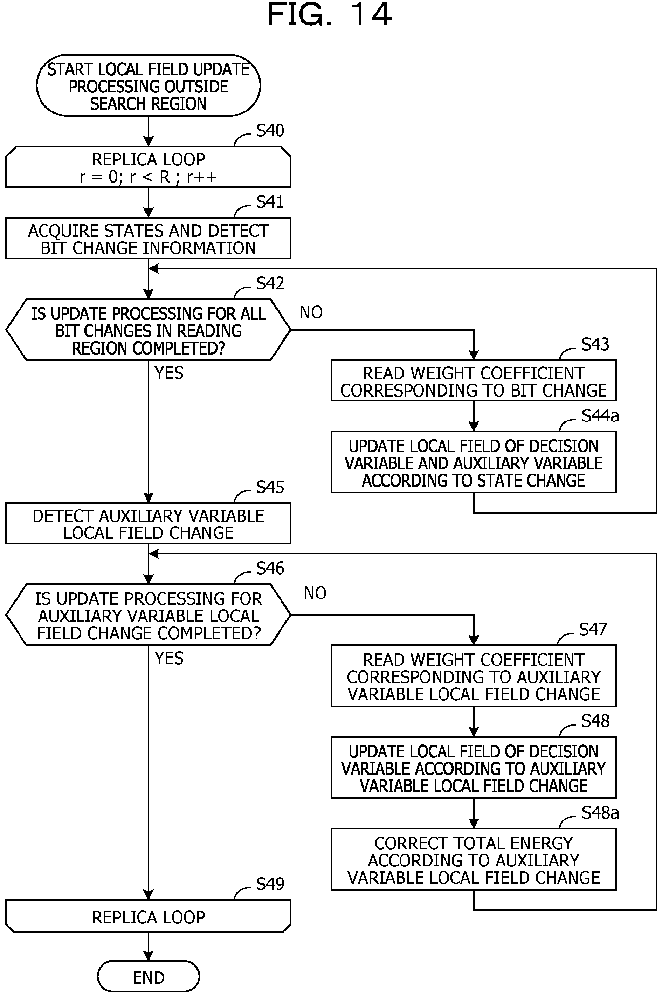

FIG. 14 is a flowchart illustrating an example of the local field update processing outside a search region.

The local field update processing outside a search region of the third embodiment includes steps S44a and S48a in addition to the procedure of the second embodiment illustrated in FIG. 9. Hereinafter, steps S44a and S48a will be mainly described, and description of the other steps will be omitted. Step S44a is executed after step S43. Step S48a is executed after step S48.

(S44a) The search unit 130 performs update of the local field of a decision variable outside the window according to the state change based on formula (15). The search unit 130 performs update of the local field of an auxiliary variable outside the window according to the state change based on formula (16). The processing proceeds to step S42.

In step S48, in addition to the update of a local field of a decision variable outside a window by formula (18), the search unit 130 also performs correction of the local field of a decision variable in the window by formula (18) based on the local fields before and after update of the auxiliary variable outside the window in step S44a.

(S48a) The search unit 130 performs correction of total energy H according to the auxiliary variable local field change based on formula (23). The correction of step S48a is performed by the H correction amount calculation unit 139 of the search unit 130. The processing proceeds to step S46.

In a case where a solution of minimum energy is updated in the process of sequentially adding up, to H, the correction amount for each change of decision variable in step S48a, the search unit 130 holds the solution of minimum energy. At the time when the overall processing is completed, the search unit 130 outputs the solution of minimum energy that has been finally obtained.

In this way, according to the data processing device 100 of the third embodiment, it is possible to reduce the size of the weight coefficients held in the weight coefficient storage unit 131 at the time of search processing. Consequently, the data processing device 100 may save the memory use amount of the internal memory 111. Arithmetic resources for the search processing of the processor 110 may be reduced by narrowing down the target of search processing to a part of all decision variables. Consequently, the data processing device 100 may efficiently execute solution finding of a large-scale discrete optimization problem including a constraint condition by using relatively small calculation resources.

The data processing device 100 according to the third embodiment also separates weight coefficients corresponding to auxiliary variables (constraint conditions) and reads the weight coefficients into the weight coefficient storage unit 131. For this reason, in the third embodiment, the memory use amount of the internal memory 111 may be saved as compared with the second embodiment. Arithmetic resources for the search processing of the processor 110 may be further reduced. In the third embodiment, the arithmetic operation amount in search processing is reduced as compared with the second embodiment. For this reason, the data processing device 100 may speed up search processing.

While an inequality constraint is mainly described in the above second and third embodiments with $G_k(h_k) = g(h_k)$, the data processing device 100 may handle a high-order cost function by $G_k$ without being limited to inequality constraints. For example, as in formula (24), an AND type constraint represented by an AND product of positive and negative literals may be considered.

$$G_k = \prod_{j \in S_k} Z_j \quad , Z_j = \begin{cases} x_j & positive\ literal \\ 1 - x_j & negative\ literal \end{cases} \tag{24}$$

$S_k$ is a set of variable indices included in constraint k.

The function form of $G_k$ in formula (24) is the same form as the aforementioned inequality constraint as illustrated in formula (27) using $W_{kj}$ in formula (25) and $b_k$ in formula (26).

$$W_{kj} = \begin{cases} +1 & k \in S_k, positive\ literal \\ 0 & k \notin S_k \\ -1 & k \in S_k, negative\ literal \end{cases} \tag{25}$$

$$b_k = 1 - (\#\ of\ positive\ literals) \tag{26}$$

$$\begin{cases} h_k = \sum_{j \in D} W_{kj} x_j + b_k \\ G_k = \max(0, h_k) \end{cases} \qquad (27)$$

As another example, the data processing device 100 may handle an XOR type constraint. $G_k$ of an XOR type constraint may be represented as in formula (30) using $W_{kj}$ of formula (28) and $h_k$ of formula (29).

$$W_{kj} = \begin{cases} 1 & j \in S_k \\ 0 & j \notin S_k \end{cases} \qquad (28)$$

$$h_k = \sum_{j \in D} W_{kj} x_j \qquad (29)$$

$$G_k(h_k) = \begin{cases} 1 & odd \ \ h_k \\ 0 & even \ \ h_k \end{cases} \qquad (30)$$

Meanwhile, in addition to the aforementioned functions of the second and third embodiments, the data processing device 100 may control whether only decision variables are to be separated, only auxiliary variables are to be separated, or both decision variables and auxiliary variables are to be separated, according to a problem. Next, an example of a procedure of separation method determination by the data processing device 100 will be described.

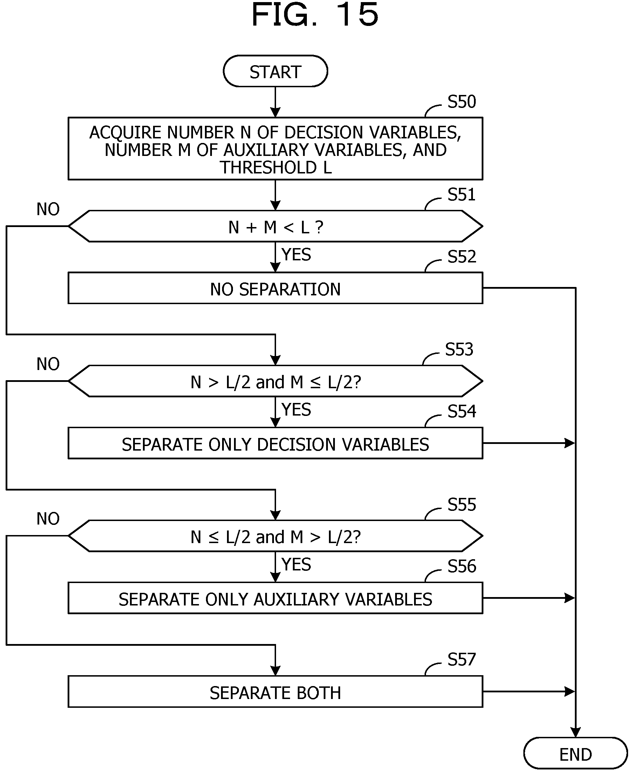

FIG. 15 is a flowchart illustrating an example of separation method determination processing.

(S50) The overall control unit 140 acquires the number N of decision variables and the number M of auxiliary variables to be used for the formulation of a problem of a solution finding target. The overall control unit 140 acquires threshold L. Threshold L is the total number of decision variables and auxiliary variables for which arithmetic operation may be efficiently performed under the constraint of the arithmetic resource amount of the processor 110 and the internal memory 111.

(S51) The overall control unit 140 determines whether N + M < L. When N + M < L, the processing proceeds to step S52. Otherwise, the processing proceeds to step S53.

(S52) The overall control unit 140 determines that window separation is not performed for either of the decision variables and the auxiliary variables. The separation method determination processing ends.

(S53) The overall control unit 140 determines whether N > L/2 and M ≤ L/2. When N > L/2 and M ≤ L/2, the processing proceeds to step S54. Otherwise, the processing proceeds to step S55.

(S54) The overall control unit 140 determines that only the decision variables are to be window-separated. In this case, the search unit 130 may perform search processing by the method of the second embodiment. The separation method determination processing ends.

(S55) The overall control unit 140 determines whether N ≤ L/2 and M > L/2. When N ≤ L/2 and M > L/2, the processing proceeds to step S56. Otherwise, the processing proceeds to step S57.

(S56) The overall control unit 140 determines that only the auxiliary variables are to be window-separated. The separation method determination processing ends.

(S57) The overall control unit 140 determines that both the decision variables and the auxiliary variables are to be window-separated. In this case, the search unit 130 may perform search processing by the method of the third embodiment. The separation method determination processing ends.

In this way, the data processing device 100 may select an appropriate separation method according to a problem.

As described above, according to the data processing device 100, it is possible to handle a large-scale problem with a small amount of calculation resources and memory in an extended Ising machine in which auxiliary variables capable of handling inequalities and high-order cost functions are introduced. The data processing device 100 may enable efficient processing according to a problem with limited arithmetic resources by selecting separation of decision variables only, auxiliary variables only, or both decision variables and auxiliary variables according to the number of decision variables and auxiliary variables used for the formulation of a problem.

For example, in in-window search processing, the data processing device 100 may reduce the arithmetic operation amount for a search since arithmetic processing is performed only for the bits in a window.

The data processing device 100 may perform, after an in-window search is performed, local field calculation outside the window for the final state regardless of the process of bit change in the middle, and may omit the arithmetic operation at the time when the same bit changes a plurality of times.

With respect to energy correction at the time of window separation of auxiliary variables, the data processing device 100 performs processing on a bit-by-bit basis for a bit change (a change in the value of a decision variable) at the time of an in-window search. At this time, the data processing device 100 may efficiently perform energy correction since the local field of a decision variable related to the energy correction may be only the local field corresponding to the bit changed at the time of the in-window search and calculation in the middle process may be omitted for the other local fields.

Hereinafter, $h_i$ represented by formula (12) will be supplementarily described.

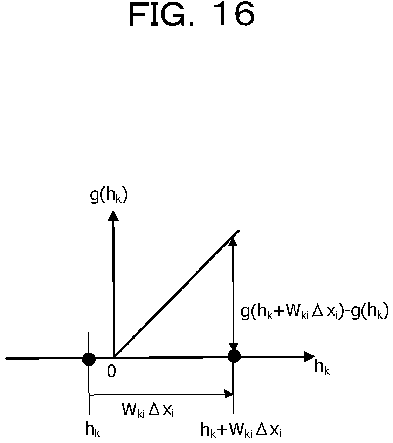

FIG. 16 is a diagram illustrating a change example of the value of a penalty function due to a change in the value of a state variable.

The vertical axis represents the magnitude of $g(h_k)$, and the horizontal axis represents $h_k$.

In FIG. 16, $g(h_k) = \max(0, h_k)$ is used as an example of the penalty function. With a change in the value of $x_i$, when $h_k$ changes to $h_k + W_{ki}\Delta x_i$, a change amount of the value of the penalty function is represented as $g(h_k + W_{ki}\Delta x_i) - g(h_k)$.

The aforementioned data processing devices 10 and 100 use, as the local field ($h_i$) of a decision variable, a local field in which not only a change amount of the sum of the first term and second term on the right side of formula (8) ($E(x)$ of formula (1)) due to a change in the value of $x_i$, but also a change amount of the value of the third term are reflected. Such $h_i$ is represented by formula (12).

Next, the local field update based on formula (15), formula (16), and formula (17) will be supplementarily described.

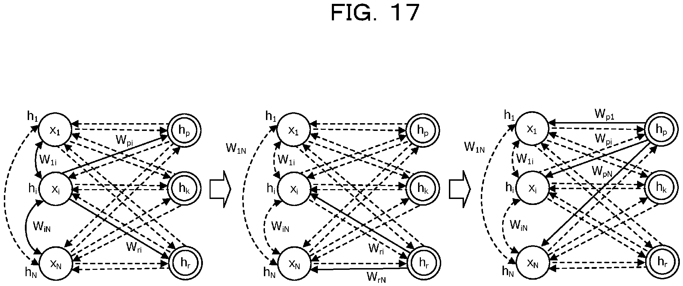

FIG. 17 is a diagram illustrating a procedure of an example of the local field update.

$x_1$, $x_i$, $x_N$ are state variables (decision variables), and $h_p$, $h_k$, $h_r$ are local fields corresponding to constraint conditions p, k, and r.

In a case where the value of $x_i$ in the state variables $x_1$, $x_i$, and $x_N$ changes, a local field corresponding to a decision variable (first local field) for which the weight coefficient between the local field and $x_i$ is non-zero and a local field corresponding to an auxiliary variable (second local field) for which the weight coefficient between the local field and $x_i$ is non-zero are updated. For example, $h_1$ corresponding to $x_i$ for which the weight coefficient ($W_{1i}$) between $h_1$ and $x_i$ is non-zero is updated by adding $\Delta h_1 = W_{1i}\Delta x_i$, and $h_N$ corresponding to $x_N$ for which the weight coefficient ($W_{iN}$) between $h_N$ and $x_i$ is non-zero is updated by adding $\Delta h_N = W_{iN}\Delta x_i$. $h_p$ for which the weight coefficient ($W_{pi}$) between $h_p$ and $x_i$ is non-zero is updated by adding $\Delta h_p = W_{pi}\Delta x_i$, and $h_r$ for which the weight coefficient ($W_{ri}$) between $h_r$ and $x_i$ is non-zero is updated by adding $\Delta h_r = W_{ri}\Delta x_i$.

Next, local fields corresponding to decision variables for which the weight coefficients between the local fields and a local field of an auxiliary variable whose value has changed are non-zero are updated based on formula (17). For example, $h_i$ and $h_N$ corresponding to $x_i$ and $x_N$ for which the weight coefficients ($W_{ri}$ and $W_{rN}$) between $h_i$ and $h_N$ and $h_r$ are non-zero are updated based on formula (17). $h_1$, $h_i$, and $h_N$ corresponding to $x_1$, $x_i$, and $x_N$ for which the weight coefficients ($W_{p1}$, $W_{pi}$, and $W_{pN}$) between $h_1$, $h_i$, and $h_N$ and $h_p$ are non-zero are updated based on formula (17).

For example, the data processing device 100 described above executes the following processing.

The data processing device 100 searches for a solution represented by a combination of the values of a plurality of state variables based on an Ising-type evaluation function including the plurality of state variables and terms corresponding to a plurality of constraint conditions. A storage device such as the DRAM 120 stores a first weight coefficient group indicating weights between a plurality of state variables and a second weight coefficient group indicating weights between each of the plurality of state variables and each of a plurality of constraint conditions. The internal memory 111 stores a part of the first weight coefficient group stored in the storage device, a part of the second weight coefficient group stored in the storage device, and a first local field representing a change amount of the value of the evaluation function in a case where the value of each of the plurality of state variables changes. The internal memory 111 stores a second local field used for identification of a constraint violation amount for each of the plurality of constraint conditions.

For a trial target portion of the plurality of state variables that is a portion including a plurality of first state variables that is a target of a trial as to whether update of the values is to be performed, the processor 110 reads, from the storage device, first weight coefficients corresponding to the first state variables belonging to the trial target portion in the first weight coefficient group and second weight coefficients corresponding to the first state variables belonging to the trial target portion in the second weight coefficient group, and stores the first and second weight coefficients in the internal memory 111.

The processor 110 executes search processing in which first processing and second processing are repeated. The first processing is processing of determining whether a change in the value of a first state variable belonging to the trial target portion is permitted based on a first local field. The second processing is processing in which, when it is determined that a change in the value of a first state variable is permitted, the first local field is updated based on the first weight coefficient stored in the internal memory 111, a second local field is updated based on the second weight coefficient stored in the internal memory 111, and the first local field corresponding to each of the plurality of first state variables is further updated based on the second local field before update and the second local field after update.

When the search processing for the current trial target portion ends, the processor 110 updates the first local field corresponding to a second state variable not belonging to the current trial target portion based on the second local field at the start of the search processing for the current trial target portion and the second local field after the search processing for the current trial target portion. The processor 110 changes the trial target portion to the next portion of the plurality of state variables.

The processor 110 repeatedly performs the above processing.

Consequently, the data processing device 100 may reduce the size of the weight coefficients held in the internal memory 111 and save the memory capacity, as compared with a case where all of the weight coefficients are held in the internal memory 111. The data processing device 100 may efficiently execute solution finding of a large-scale discrete optimization problem including a constraint condition by using relatively small calculation resources. As described before, the internal memory 111 is an example of a "storage unit". The processor 110 is an example of a "processing unit".

For example, the processor 110 may read, from the storage device, all of the second weight coefficients corresponding to the first state variables belonging to the trial target portion and store the second weight coefficients in the internal memory 111. In search processing, when a change in the value of a first state variable is permitted, the processor 110 may update the second local field corresponding to each of the plurality of constraint conditions based on the second weight coefficients stored in the internal memory 111.

Consequently, the data processing device 100 may appropriately update the second local field corresponding to each of the plurality of constraint conditions.

The processor 110 may perform window separation for both the decision variables and the auxiliary variables as exemplified in the third embodiment. For example, the processor 110 may read, from the storage device, a part of second weight coefficients of all second weight coefficients corresponding to the plurality of first state variables belonging to the trial target portion and store the second weight coefficients in the internal memory 111, the part of second weight coefficients corresponding to a part of constraint conditions of the plurality of constraint conditions, and perform search processing based on the second weight coefficients stored in the internal memory 111. For example, in search processing, when a change in the value of a first state variable is permitted, the processor 110 calculates the value of the evaluation function based on the first local field and stores the value in the internal memory. The processor 110 updates the second local fields corresponding to the part of constraint conditions based on the second weight coefficients held in the internal memory 111, and further updates the first local field corresponding to each of the plurality of first state variables based on the second local fields before and after update.

When the search processing ends, the processor 110 updates the second local field corresponding to a constraint condition of the plurality of constraint conditions other than the part of constraint conditions based on a change in the value of a first state variable belonging to the current trial target portion and a second weight coefficient of a portion different from the part of second weight coefficients used in the search processing of all second weight coefficients corresponding to the first state variables. After the update, the processor 101 updates the first local field corresponding to a second state variable not belonging to the current trial target portion based on the second local field at the start of the search processing for the current trial target portion and the present second local field, and corrects the first local field corresponding to a first state variable belonging to the trial target portion. The processor 110 corrects the value of the evaluation function stored in the internal memory 111 based on a change in the value of a first state variable belonging to the current trial target portion and the second local field corresponding to a constraint condition other than the part of constraint conditions.

After that, the processor 110 reads, from the storage device, the plurality of first state variables belonging to the current trial target portion and the second weight coefficients corresponding to the next part of constraint conditions of the plurality of constraint conditions and stores the first state variables and second weight coefficients in the internal memory 111, and proceeds to search processing based on the second weight coefficients stored in the internal memory 111.

When the above processing is repeatedly performed for the current trial target portion and the search processing related to all constraint conditions is performed the current trial target portion, the processor 110 changes the trial target portion to the next portion of the plurality of state variables.

Consequently, the data processing device 100 may efficiently execute solution finding of a large-scale discrete optimization problem including a constraint condition by using relatively small calculation resources. For example, the data processing device 100 may save the memory capacity of the internal memory 111 and may achieve speeding up of search processing as compared with the second embodiment.

The processor 110 may read, from the storage device, a first portion of first weight coefficients corresponding to a pair of first state variables among all first weight coefficients corresponding to each of the plurality of first state variables belonging to the trial target portion and store the first portion in the internal memory 111.

In this case, in search processing, when a change in the value of a first state variable is permitted, the processor 110 updates the first local field corresponding to each of the plurality of first state variables belonging to the trial target portion of the plurality of state variables based on the first portion of first weight coefficients stored in the internal memory 111. In the update of the first local field corresponding to a second state variable when the search processing for the current trial target portion ends, the processor 110 further updates the first local field corresponding to a second state variable based on a change in the value of a first state variable belonging to the current trial target portion and the first weight coefficient corresponding to the pair of the first state variable and the second state variable.

Consequently, the data processing device 100 may reduce the size of the weight coefficients held in the internal memory 111 and further save the memory capacity.

The processor 110 may read, from the storage device, all of the first weight coefficients corresponding to each of the plurality of first state variables belonging to the trial target portion and store the first weight coefficients in the internal memory 111. In this case, in search processing, when a change in the value of a first state variable is permitted, the processor 110 updates the first local field corresponding to each of the plurality of state variables based on the first weight coefficients stored in the internal memory 111.

Consequently, the data processing device 100 may reduce the size of the weight coefficients held in the internal memory 111 and save the memory capacity, as compared with a case where all of the weight coefficients are held in the internal memory 111.

As exemplified in FIG. 15, the processor 110 may determine the separation method of decision variables and auxiliary variables based on N, M, and L. For example, the processor 110 may determine whether the search processing is performed by separating at least the plurality of state variables or the plurality of constraint conditions based on the number (N) of the plurality of state variables indicated by the evaluation function, the number (M) of the plurality of constraint conditions, and an upper limit value (L) allowed for a sum of the number of the plurality of state variables and the number of the plurality of constraint conditions.

Consequently, the data processing device 100 may select an appropriate separation method according to a problem, and may efficiently perform search processing using limited arithmetic resources. Whether the weight coefficient groups 211, 212, and 213 are separated and held in the internal memory 111 is determined according to whether window separation of decision variables and auxiliary variables is performed. For example, when decision variables are not window-separated, the entire weight coefficient group 211 is stored in the internal memory 111. Weight coefficient portions of the weight coefficient groups 211, 212, and 213 to be held in the internal memory 111 are determined by the window separation method of decision variables and auxiliary variables.

The information processing of the first embodiment may be achieved by causing the processing unit 12 to execute a program. The information processing of the second embodiment may be achieved by causing the processor 101 to execute a program. The program may be recorded in the computer-readable recording medium 53.

For example, the program may be distributed by distributing the recording medium 53 in which the program is recorded. The program may be stored in another computer, and the program may be distributed via a network. For example, a computer may store (install), in a storage device such as the DRAM 102 or the HDD 103, the program recorded in the recording medium 53 or the program received from the other computer, and read the program from the storage device and execute the program.

**Claims**

1. A data processing device that searches for a solution represented by a combination of values of a plurality of state variables based on an Ising-type evaluation function that includes the plurality of state variables and terms that correspond to a plurality of constraint conditions, the data processing device comprising:

   a storage unit that stores a part of a first weight coefficient group stored in a storage device that stores a first weight coefficient group that indicates weights between the plurality of state variables and a second weight coefficient group that indicates weights between each of the plurality of state variables and each of the plurality of constraint conditions, a part of the second weight coefficient group stored in the storage device, a first local field that represents a change amount of a value of the evaluation function in a case where a value of each of the plurality of state variables changes, and a second local field used for identification of a constraint violation amount for each of the plurality of constraint conditions; and
   a processing unit that repeats processing of
   for a trial target portion of the plurality of state variables that is a portion that includes a plurality of first state variables that is a target of a trial as to whether update of values is to be performed, reading, from the storage device, first weight coefficients that correspond to first state variables that belong to the trial target portion in the first weight coefficient group and second weight coefficients that correspond to the first state variables that belong to the trial target portion in the second weight coefficient group, and storing the first and second weight coefficients in the storage unit,
   executing search processing that repeats first processing in which whether a change in values of the first state variables that belong to the trial target portion is permitted is determined based on the first local field, and second processing in which, when it is determined that a change in values of the first state variables is permitted, the first local field is updated based on the first weight coefficients stored in the storage unit, the second local field is updated based on the second weight coefficients stored in the storage unit, and the first local field that corresponds to each of the plurality first state variables is further updated based on the second local field before update and the second local field after update,

when the search processing for the trial target portion of this time ends, updating the first local field that corresponds to a second state variable that does not belong to the trial target portion of this time based on the second local field at start of the search processing for the trial target portion of this time and the second local field after the search processing for the trial target portion of this time, and

changing the trial target portion to a next portion of the plurality of state variables.

2. The data processing device according to claim 1, wherein

the processing unit

reads, from the storage device, all of the second weight coefficients that correspond to the first state variables that belong to the trial target portion, and stores the second weight coefficients in the storage unit, and

in the search processing, when a change in values of the first state variables is permitted, the second local field that corresponds to each of the plurality of constraint conditions is updated based on the second weight coefficients stored in the storage unit.

3. The data processing device according to claim 1, wherein

the processing unit repeats processing of

reading, from the storage device, a part of the second weight coefficients of all of the second weight coefficients that correspond to the plurality of first state variables that belongs to the trial target portion and correspond to a part of constraint conditions of the plurality of constraint conditions and storing the part of the second weight coefficients in the storage unit, and performing the search processing based on the second weight coefficients stored in the storage unit,

in the search processing, when a change in values of the first state variables is permitted, calculating a value of the evaluation function based on the first local field and storing the value in the storage unit, updating the second local field that corresponds to the part of constraint conditions based on the second weight coefficients held in the storage unit, and further updating the first local field that corresponds to each of the plurality of first state variables based on the second local field before and after update,

when the search processing ends, updating the second local field that corresponds to a constraint condition other than the part of constraint conditions of the plurality of constraint conditions based on a change in values of the first state variables that belongs to the trial target portion and the second weight coefficients of a portion different from a part of the second weight coefficients used in the search processing among all of the second weight coefficients that correspond to the first state variables, and after the update, updating the first local field that corresponds to the second state variable that does not belong to the trial target portion of this time based on the second local field at start of the search processing for the trial target portion of this time and the second local field of present time, and correcting the first local field that corresponds to the first state variables that belong to the trial target portion, correcting a value of the evaluation function stored in the storage unit based on a change in values of the first state variables that belong to the trial target portion and the second local field that corresponds to the constraint condition other than the part of constraint conditions, and

reading, from the storage device, the plurality of first state variables that belongs to the trial target portion and the second weight coefficients that correspond to a next part of constraint conditions of the plurality of constraint conditions and storing the first state variables and second weight coefficients in the storage unit, and proceeding to the search processing based on the second weight coefficients stored in the storage unit, and

when the search processing related to all of the constraint conditions is performed for the trial target portion of this time, changes the trial target portion to a next portion of the plurality of state variables.

4. The data processing device according to claim 1, wherein

the processing unit

reads, from the storage device, a first portion of the first weight coefficients that corresponds to pairs of the first state variables among all of the first weight coefficients that correspond to each of the plurality of first state variables that belongs to the trial target portion, and stores the first portion in the storage unit,

in the search processing, when a change in values of the first state variables is permitted, updates the first local field that corresponds to each of the plurality of first state variables that belongs to the trial target portion of the plurality of state variables based on the first portion of the first weight coefficients stored in the storage unit, and in update of the first local field that corresponds to the second state variable when the search processing for the trial target portion of this time ends, further updates the first local field that corresponds to the second state variable based on a change in values of the first state variables that belong to the trial target portion of this time and the first weight coefficients that correspond to pairs of the first state variables and the second state variable.

5. The data processing device according to claim 1, wherein

the processing unit
reads, from the storage device, all of the first weight coefficients that correspond to each of the plurality of first state variables that belongs to the trial target portion and stores the first weight coefficients in the storage unit, and in the search processing, when a change in values of the first state variables is permitted, updates the first local field that corresponds to each of the plurality of state variables based on the first weight coefficients stored in the storage unit.

6. The data processing device according to claim 1, wherein
the processing unit determines whether the search processing is performed by separating at least the plurality of state variables or the plurality of constraint conditions based on a number of the plurality of state variables indicated by the evaluation function, a number of the plurality of constraint conditions, and an upper limit value allowed for a sum of a number of the plurality of state variables and a number of the plurality of constraint conditions.

7. A data processing method implemented by a computer of searching for a solution represented by a combination of values of a plurality of state variables based on an Ising-type evaluation function that includes the plurality of state variables and terms that correspond to a plurality of constraint conditions, the data processing method comprising

the computer reading, for a trial target portion among the plurality of state variables, first weight coefficients and second weight coefficients from a storage device that stores a first weight coefficient group that indicates weights between the plurality of state variables and a second weight coefficient group that indicates weights between each of the plurality of state variables and each of the plurality of constraint conditions, the trial target portion being a portion that includes a plurality of first state variables that is a target of a trial as to whether update of values is to be performed, the first weight coefficients being weight coefficients that correspond to first state variables that belong to the trial target portion in the first weight coefficient group, the second weight coefficients being weight coefficients that correspond to the first state variables that belong to the trial target portion in the second weight coefficient group;
the computer executing search processing that repeats first processing in which whether a change in values of the first state variables that belong to the trial target portion is permitted based on a first local field that represents a change amount of a value of the evaluation function in a case where a value of each of the plurality of state variables changes, and second processing in which, when it is determined that a change in values of the first state variables is permitted, the first local field is updated based on the first weight coefficients and a second local field used for identification of a constraint violation amount for each of the plurality of constraint conditions is updated based on the second weight coefficients, and the first local field that corresponds to each of the plurality of first state variables is further updated based on the second local field before update and the second local field after update;
the computer updating, when the search processing for the trial target portion of this time ends, the first local field that corresponds to a second state variable that does not belong to the trial target portion of this time based on the second local field at start of the search processing for the trial target portion of this time and the second local field after the search processing for the trial target portion of this time; and
the computer changing the trial target portion from a current portion to a next portion of the plurality of state variables, to perform, using the changed trial target portion, the reading of the first and second weight coefficients and the executing of the search processing.

8. A data processing program of searching for a solution represented by a combination of values of a plurality of state variables based on an Ising-type evaluation function that includes the plurality of state variables and terms that correspond to a plurality of constraint conditions, the data processing program comprising instructions, which executed by a computer, cause the computer to perform repeatedly processing comprising:

reading, for a trial target portion among the plurality of state variables, first weight coefficients and second weight coefficients from a storage device that stores a first weight coefficient group that indicates weights between the plurality of state variables and a second weight coefficient group that indicates weights between each of the plurality of state variables and each of the plurality of constraint conditions, the trial target portion being a portion that includes a plurality of first state variables that is a target of a trial as to whether update of values is to be performed, the first weight coefficients being weight coefficients that correspond to first state variables that belong to the trial target portion in the first weight coefficient group, the second weight coefficients being weight coefficients that correspond to the first state variables that belong to the trial target portion in the second weight coefficient group;

executing search processing that repeats first processing in which whether a change in values of the first state variables that belong to the trial target portion is permitted based on a first local field that represents a change amount of a value of the evaluation function in a case where a value of each of the plurality of state variables changes, and second processing in which, when it is determined that a change in values of the first state variables is permitted, the first local field is updated based on the first weight coefficients and a second local field used for identification of a constraint violation amount for each of the plurality of constraint conditions is updated based on the second weight coefficients, and the first local field that corresponds to each of the plurality of first state variables is further updated based on the second local field before update and the second local field after update;

when the search processing for the trial target portion of this time ends, updating the first local field that corresponds to a second state variable that does not belong to the trial target portion of this time based on the second local field at start of the search processing for the trial target portion of this time and the second local field after the search processing for the trial target portion of this time; and

changing the trial target portion from a current portion to a next portion of the plurality of state variables, to perform, using the changed trial target portion, the reading of the first and second weight coefficients and the executing of the search processing.

# FIG. 1

ALL WEIGHT COEFFICIENTS

30

FIRST WEIGHT
COEFFICIENT
GROUP $\{W_{ij}\}$

$\{W_{ki}\}$

40

$\{W_{ik}\}$

STORAGE
DEVICE

20

DATA PROCESSING DEVICE

10

STORAGE
UNIT

11

PROCESSING
UNIT

12

[S1] WHEN TRIAL TARGET PORTION
(1) IS SEARCHED

[S2] WHEN TRIAL TARGET PORTION (2)
IS SEARCHED

31    $\{W_{ij}\}$    32

$\{W_{ki}\}$

1

1

41

$\{W_{ij}\}$

33

2

34

$\{W_{ki}\}$

2

43

$\{W_{ik}\}$

1

42

$\{W_{ik}\}$

2

44

# FIG. 2

DATA PROCESSING DEVICE    100

PROCESSOR    101

DRAM    102

HDD    103

GPU    104

INPUT INTERFACE    105

MEDIUM READER    106

COMMUNICATION INTERFACE    107

BUS

51

52

53

54    NETWORK

ACCELERATOR CARD    108

PROCESSOR    110

INTERNAL MEMORY    111

DRAM    120

EP 4 636 654 A1

# FIG. 3

DRAM 120

DATA STORAGE UNIT 121

100

PROCESSOR 110

MEMORY CONTROL UNIT 150

OVERALL CONTROL UNIT 140

SEARCH UNIT 130

WEIGHT COEFFICIENT STORAGE UNIT 131

DATA TRANSFER CONTROL UNIT 160

STATE CHANGE DETECTION UNIT 170

LOCAL FIELD UPDATE UNIT 134

STATE

LOCAL FIELD

STATE HOLDING UNIT 132

LOCAL FIELD HOLDING UNIT 133

START STATE

END STATE

135 ΔH CALCULATION UNIT

LOCAL FIELD CHANGE DETECTION UNIT

LOCAL FIELD AT START

136 SELECTION UNIT

LOCAL FIELD AT END 138

FLIP BIT

H CALCULATION UNIT 137

29

# FIG. 4

WEIGHT COEFFICIENT GROUP $\{W_{ij}\}$    211

$\{W_{ki}\}$
AUXILIARY VARIABLES (M)

DECISION VARIABLES (N)

212

WEIGHT COEFFICIENT GROUP $\{W_{ik}\}$    213

M

| 1 | 2 | 3 | 4 |

| LOCAL FIELD | hi_1 | hi_2 | hi_3 | hi_4 | | hk |

| STATE | xi_1 | xi_2 | xi_3 | xi_4 |

# FIG. 5

(ST10) WHEN WINDOW 1 IS SEARCHED
DECISION VARIABLES (N)   211   AUXILIARY VARIABLES (M)

(ST11) UPDATE PROCESSING AFTER SEARCH OF WINDOW 1
DECISION VARIABLES (N)   211   AUXILIARY VARIABLES (M)

212

213

M

hi_1

xi_1

xi_1_old

hk

hk_old

hi

xi_1

xi_1_old

hk

hk_old

# FIG. 6

(ST12) WHEN WINDOW 2 IS SEARCHED

(ST13) UPDATE PROCESSING AFTER SEARCH OF WINDOW 2

# FIG. 7

```
        ( START )
            │
            ▼                            S10
┌─────────────────────────────────────┐
│           INITIALIZATION             │
└─────────────────────────────────────┘
            │
            ▼                            S11
┌─────────────────────────────────────┐
│    DETERMINE SEARCH REGION WINDOW    │
└─────────────────────────────────────┘
            │
            ▼                            S12
┌─────────────────────────────────────┐
│  DATA TRANSFER FOR SEARCH REGION     │
│            WINDOW                     │
└─────────────────────────────────────┘
            │
            ▼                            S13
┌─────────────────────────────────────┐
│     IN-WINDOW SEARCH PROCESSING      │
└─────────────────────────────────────┘
            │
            ▼                            S14
┌─────────────────────────────────────┐
│ LOCAL FIELD UPDATE PROCESSING        │
│       OUTSIDE SEARCH REGION          │
└─────────────────────────────────────┘
            │
            ▼                            S15
   NO   ╱ IS LOCAL FIELD UPDATE ╲
  ◄─────  OUTSIDE SEARCH REGION
        ╲    COMPLETED?        ╱
            │ YES
            ▼                            S16
        ╱ IS IT REPLICA          ╲    NO
         ╲  EXCHANGE TIMING?     ╱ ────►
            │ YES
            ▼                            S17
┌─────────────────────────────────────┐
│     REPLICA EXCHANGE PROCESSING      │
└─────────────────────────────────────┘
            │◄───────────────────────────
            ▼                            S18
   NO   ╱                      ╲
  ◄─────    IS IT SEARCH END?
        ╲                      ╱
            │ YES
            ▼
         ( END )
```

# FIG. 8

```
        ┌─────────────────────────┐
        │   START IN-WINDOW        │
        │   SEARCH PROCESSING      │
        └─────────────────────────┘
                    │
                    ▼              S20
        ┌─────────────────────────┐
        │  SET SEARCH PARAMETERS   │
        └─────────────────────────┘
                    │
                    ▼              S21
        ┌─────────────────────────┐
        │    ITERATION LOOP        │
        │   i = 0 ; i < T ; i++    │
        └─────────────────────────┘
                    │
                    ▼              S22
        ┌─────────────────────────┐
        │    REPLICA LOOP          │
        │   r = 0 ; r < R ; r++    │
        └─────────────────────────┘
                    │
                    ▼              S23
        ┌─────────────────────────┐
        │      CALCULATE ΔH        │
        └─────────────────────────┘
                    │
                    ▼              S24
        ┌─────────────────────────┐
        │ BIT ACCEPTANCE DETERMINATION │
        └─────────────────────────┘
                    │
                    ▼              S25
        ┌─────────────────────────┐
        │    FLIP BIT SELECTION    │
        └─────────────────────────┘
                    │
                    ▼              S26          NO
        ◁─────────────────────────────▷──────────────►
          IS BIT FLIPPING PERMITTED?
                    │ YES           S27
        ┌─────────────────────────┐
        │  LOCAL FIELD UPDATE (1)  │
        │  (DECISION VARIABLE AND  │
        │   AUXILIARY VARIABLE)    │
        └─────────────────────────┘
                    │              S28
        ┌─────────────────────────┐
        │ CALCULATE CONTRIBUTION FROM │
        │ AUXILIARY VARIABLE TO DECISION │
        │         VARIABLE         │
        └─────────────────────────┘
                    │              S29
        ┌─────────────────────────┐
        │  LOCAL FIELD UPDATE (2)  │
        │   (DECISION VARIABLE)    │
        └─────────────────────────┘
```

```
                    S30
        ┌─────────────────────────┐
        │      REPLICA LOOP        │
        └─────────────────────────┘
                    │              S31
        ┌─────────────────────────┐
        │     ITERATION LOOP       │
        └─────────────────────────┘
                    │              S32         NO
        ◁─────────────────────────────▷──────────►
          IS IN-WINDOW SEARCH END?
                    │ YES
        ┌─────────────────────────┐
        │          END            │
        └─────────────────────────┘
```

# FIG. 9

START LOCAL FIELD UPDATE
PROCESSING OUTSIDE SEARCH
REGION

— S40

REPLICA LOOP
r = 0; r < R ; r++

— S41

ACQUIRE STATES AND DETECT
BIT CHANGE INFORMATION

— S42

IS UPDATE PROCESSING FOR ALL
BIT CHANGES IN READING
REGION COMPLETED?

NO →

— S43

READ WEIGHT COEFFICIENT
CORRESPONDING TO BIT CHANGE

— S44

UPDATE LOCAL FIELD OF DECISION
VARIABLE ACCORDING TO STATE
CHANGE

YES

— S45

DETECT AUXILIARY VARIABLE
LOCAL FIELD CHANGE

— S46

IS UPDATE PROCESSING FOR
AUXILIARY VARIABLE LOCAL
FIELD CHANGE COMPLETED?

NO →

— S47

READ WEIGHT COEFFICIENT
CORRESPONDING TO AUXILIARY
VARIABLE LOCAL FIELD CHANGE

— S48

UPDATE LOCAL FIELD OF DECISION
VARIABLE ACCORDING TO
AUXILIARY VARIABLE LOCAL FIELD
CHANGE

YES

— S49

REPLICA LOOP

END

# FIG. 10

# FIG. 11

WEIGHT COEFFICIENT
GROUP {$W_{ij}$}

DECISION VARIABLES (N)

211

| 1 | | | |
|---|---|---|---|
| | 2 | | |
| | | 3 | |
| | | | 4 |

WEIGHT COEFFICIENT
GROUP {$W_{ki}$}

AUXILIARY
VARIABLES (M)

212

| 1a | 1b | 1c |
|----|----|----|
| 2a | 2b | 2c |
| 3a | 3b | 3c |
| 4a | 4b | 4c |

WEIGHT COEFFICIENT
GROUP {$W_{ik}$}

213

M

| 1a | 2a | 3a | 4a |
|----|----|----|----|
| 1b | 2b | 3b | 4b |
| 1c | 2c | 3c | 4c |

LOCAL FIELD

| hi_1 | hi_2 | hi_3 | hi_4 |
|------|------|------|------|

| hka | hkb | hkc |
|-----|-----|-----|

STATE

| xi_1 | xi_2 | xi_3 | xi_4 |
|------|------|------|------|

# FIG. 12

(ST20) WHEN WINDOW 1a IS SEARCHED

DECISION VARIABLES (N)　　211　AUXILIARY VARIABLES (M)　212

| 1 | | 1a |

M

213

| 1a |

hi_1　　hka

xi_1　　hka_old

xi_1_old

(ST21) UPDATE PROCESSING AFTER SEARCH OF WINDOW 1a

DECISION VARIABLES (N)　211　AUXILIARY VARIABLES (M)

212

M

213

hi_1　　hi

xi_1

xi_1_old

| hka | hkb | hkc |

| hka_old | hkb_old | hkc_old |

# FIG. 13

(ST22) WHEN WINDOW 1b IS SEARCHED

(ST23) UPDATE PROCESSING AFTER SEARCH OF WINDOW 1b

# FIG. 14

START LOCAL FIELD UPDATE
PROCESSING OUTSIDE
SEARCH REGION

S40
REPLICA LOOP
r = 0; r < R ; r++

S41
ACQUIRE STATES AND DETECT
BIT CHANGE INFORMATION

S42
IS UPDATE PROCESSING FOR ALL
BIT CHANGES IN READING
REGION COMPLETED?

NO

YES

S43
READ WEIGHT COEFFICIENT
CORRESPONDING TO BIT CHANGE

S44a
UPDATE LOCAL FIELD OF DECISION
VARIABLE AND AUXILIARY VARIABLE
ACCORDING TO STATE CHANGE

S45
DETECT AUXILIARY VARIABLE
LOCAL FIELD CHANGE

S46
IS UPDATE PROCESSING FOR
AUXILIARY VARIABLE LOCAL
FIELD CHANGE COMPLETED?

NO

YES

S47
READ WEIGHT COEFFICIENT
CORRESPONDING TO AUXILIARY
VARIABLE LOCAL FIELD CHANGE

S48
UPDATE LOCAL FIELD OF DECISION
VARIABLE ACCORDING TO AUXILIARY
VARIABLE LOCAL FIELD CHANGE

S48a
CORRECT TOTAL ENERGY
ACCORDING TO AUXILIARY
VARIABLE LOCAL FIELD CHANGE

S49
REPLICA LOOP

END

# FIG. 15

```
                              ( START )
                                  │
                                  ▼                    ⌐S50
            ┌─────────────────────────────────────────────────┐
            │  ACQUIRE NUMBER N OF DECISION VARIABLES,         │
            │  NUMBER M OF AUXILIARY VARIABLES, AND            │
            │  THRESHOLD L                                     │
            └─────────────────────────────────────────────────┘
                                  │
                                  ▼                    ⌐S51
     NO    ╱─────────────────────────────────────────────────╲
    ◄──────       N + M < L ?                                  
           ╲─────────────────────────────────────────────────╱
      │                           │ YES                ⌐S52
      │           ┌─────────────────────────────────────────────────┐
      │           │            NO SEPARATION                         │────────┐
      │           └─────────────────────────────────────────────────┘        │
      │                           │                                           │
      │                           ▼                    ⌐S53                    │
     NO    ╱─────────────────────────────────────────────────╲                │
    ◄──────       N > L/2 and M ≤ L/2?                                         │
      │    ╲─────────────────────────────────────────────────╱                │
      │                           │ YES                ⌐S54                    │
      │           ┌─────────────────────────────────────────────────┐         │
      │           │      SEPARATE ONLY DECISION VARIABLES           │────────►│
      │           └─────────────────────────────────────────────────┘         │
      │                           │                                           │
      │                           ▼                    ⌐S55                    │
     NO    ╱─────────────────────────────────────────────────╲                │
    ◄──────       N ≤ L/2 and M > L/2?                                         │
      │    ╲─────────────────────────────────────────────────╱                │
      │                           │ YES                ⌐S56                    │
      │           ┌─────────────────────────────────────────────────┐         │
      │           │      SEPARATE ONLY AUXILIARY VARIABLES          │────────►│
      │           └─────────────────────────────────────────────────┘         │
      │                           │                                           │
      │                           ▼                    ⌐S57                    │
      └──────────►┌─────────────────────────────────────────────────┐         │
                  │            SEPARATE BOTH                         │────────►│
                  └─────────────────────────────────────────────────┘         │
                                                                              ▼
                                                                         ( END )
```

# FIG. 16

# FIG. 17

Europäisches
Patentamt

European
Patent Office

Office européen
des brevets

# EUROPEAN SEARCH REPORT

**Application Number**

EP 25 15 9154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIN FANG ET AL: "Extended Ising Machine with Additional Non-quadratic Cost Functions", JOURNAL OF THE PHYSICAL SOCIETY OF JAPAN, vol. 92, no. 3, 15 March 2023 (2023-03-15), pages 034002-1, XP093216559, ISSN: 0031-9015, DOI: 10.7566/JPSJ.92.034002 Retrieved from the Internet: URL:https://dx.doi.org/10.7566/JPSJ.92.034002> * abstract; figure 3 * * section 2.1 * * section 2.2, lines 30-36 * * section 2.2, lines 42-55 * * section 2.2, lines 65-70 * * section 3.2, lines 39-48 * * section 3.2, last paragraph * * section 4 * * equation (1)-(3) * * equations (4)-(6) * * equations (13)-(16) * ----- | 1-8 | INV. G06N5/01 G06N7/01 G06N3/044 G06F17/11 G06N3/047 |
| X | US 2023/315809 A1 (WATANABE YASUHIRO [JP] ET AL) 5 October 2023 (2023-10-05) * figure 1 * * paragraph [0072] - paragraph [0088] * * claim 8 * ----- | 1-8 | TECHNICAL FIELDS SEARCHED (IPC) G06N G06F |

The present search report has been drawn up for all claims

| Place of search | Date of completion of the search | Examiner |
|---|---|---|
| The Hague | 6 August 2025 | Aoun, Marc |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 9154

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | Publication date | Patent family member(s) | Publication date |
|---|---|---|---|
| US 2023315809 A1 | 05-10-2023 | CN 116894487 A <br> EP 4258171 A1 <br> JP 2023149428 A <br> US 2023315809 A1 | 17-10-2023 <br> 11-10-2023 <br> 13-10-2023 <br> 05-10-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020204928 A
- JP 2022125725 A
- US 20150363358
- US 20200167685
- JP 2023149428 A
- JP 2023149806 A
- US 150422